Europäisches Patentamt

European Patent Office

Office européen des brevets

(19)

(11) **EP 1 227 679 A1**

(12) **EUROPEAN PATENT APPLICATION**
published in accordance with Art. 158(3) EPC

(43) Date of publication:
**31.07.2002 Bulletin 2002/31**

(21) Application number: **00966415.2**

(22) Date of filing: **11.10.2000**

(51) Int Cl.⁷: **H04N 5/85**, H04N 5/92,
G11B 20/18, G11B 27/00,
G11B 27/10

(86) International application number:
**PCT/JP00/07056**

(87) International publication number:
**WO 01/28237 (19.04.2001 Gazette 2001/16)**

(84) Designated Contracting States:
**AT BE CH CY DE DK ES FI FR GB GR IE IT LI LU MC NL PT SE**

(30) Priority: **12.10.1999 JP 28899399**

(71) Applicant: **Sharp Kabushiki Kaisha**
**Osaka-shi, Osaka 545-8522 (JP)**

(72) Inventors:
• **KIYAMA, Jiro**
  **Chiba 274-0825 (JP)**

• **YAMAMURA, Hiroyuki**
  **Chiba-shi Chiba (JP)**
• **YAMAGUCHI, Takayoshi**
  **Nagareyama-shi Chiba 270-0121 (JP)**

(74) Representative: **Brown, Kenneth Richard et al**
**R.G.C. Jenkins & Co.**
**26 Caxton Street**
**London SW1H 0RJ (GB)**

(54) **DATA RECORDING METHOD AND DATA RESTORING METHOD**

(57) In general, time codes recorded on the disk are represented by relative times from the start of video data of each video program. Therefore, when a plurality of video programs have been recorded on one disk, a plurality of video data having identical time codes exist on the disk. In such a case, there is a fear that the data cannot be recovered in the correct order. When a sequence of video or image data is recorded on the recording medium, the sequence is recorded on the recording medium by dividing it into a plurality of units and recording within each unit the information representing the ordinal position on the sequence in which the unit is to be reproduced and the information for providing distinction of a device by which the unit was recorded. With this arrangement, even if there exist on the recording medium some units having information indicating the same ordinal position on each sequence, it is possible to make distinction between the sequences because the device ID unique to each device is allotted to each unit.

FIG.13

EP 1 227 679 A1

**Description**

Technical Field

The present invention relates to a recording method for recording motion picture sequences onto a recording medium as well as relating to data recovery method for recovering data when the management information of the recorded motion picture sequences are out of order.

Background Art

Digital video and audio recording devices based on a disk have become widespread. Disks have a great advantage over tape in their random accessibility. Therefore, if a disk has become full of data, only the unnecessary data can be selectively eliminated so as to allow new data to be written in. Deletion of data from positions halfway or change in the order of reproduction can be freely implemented. These editing functions are, in most cases, achieved not by direct movement of actual data but by rewriting the information of pointers designating the associated pieces of data. This is done because rewriting the information of pointers can be implemented far faster than actual movement of data. However, once the pointer information has been broken for some reason, it is difficult to restore the recorded data to the original order.

As a prior art for solving this problem, Japanese Patent Application Laid-Open Hei 10 No.70698 has been disclosed. This method takes advantage of the fact that data which was recorded continuously carries continuous time codes, which are allotted for every recording unit on the disk. That is, in this method, if the management information has been broken, the recovery of data is implemented by reading the data from the beginning of the disk so as to extract time codes allotted for every recording unit, and handling blocks having continuous time codes as continuous data. This technique will be described hereinbelow.

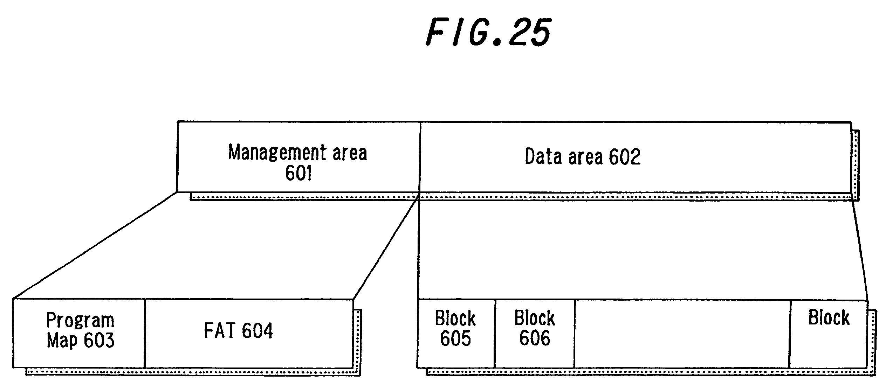

First, the recording format of a disk will be described. As shown in Fig.25, a disk is roughly separated into a management area 601 and data area 602. Management area 601 is further divided into a program map 603 and a FAT (file allocation table) 604.

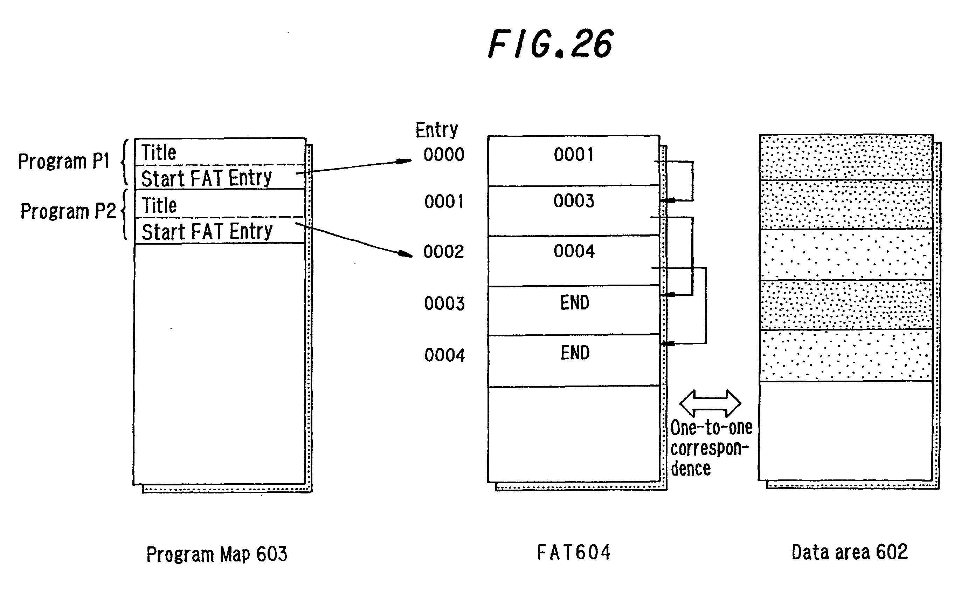

Data area 602 is divided into blocks 605, 606, ··· of a fixed size, each having an access number allotted. Fig. 26 shows the detail of the program map 603 and FAT 604.

Program map 603 is to manage data in program units, for example, one movie sequence en bloc, and hold associated start FAT entries, program names(titles) and the like.

FAT 604 is a record of how each continuous sequence of data, having recorded at scattered locations in data area 602, should be reproduced. As shown in Fig.26, each entry as a part of FAT 604 corresponds to one block in data area 602. For example, the fifth entry corresponds to the fifth block. Each entry has a pointer to the next entry, i.e., linkage information. If an entry has a code indicating the end, the data ends at the block corresponding to that entry. If an entry has a code indicating empty, the block corresponding to that entry is understood to be unused. In the case of Fig. 26, a program P1 in program map 603 is understood to be recorded over three blocks(entries), 0000, 0001 and 0003 in data area 602. It is assumed that in data area 602 every block has a sequential time code in the format of hour : minute : second : frame, written in.

Now, the process when management area 601(Fig.25) has been broken will be described. The recovery is implemented by two processing steps.

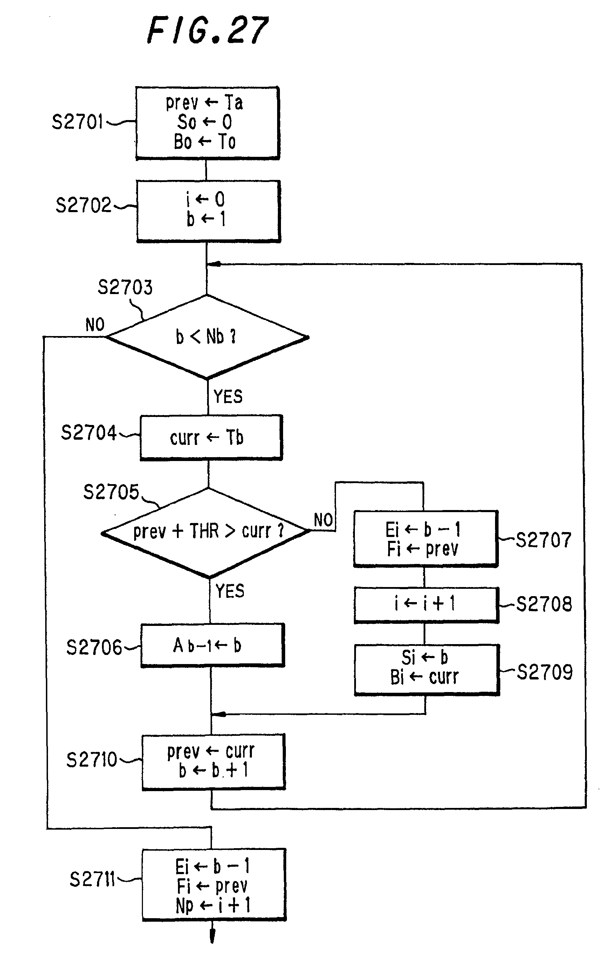

The first processing step is to implement a block uniting process by joining contiguous blocks that have sequential time codes into partial programs. Fig.27 is a flowchart showing the processing sequence of this block uniting.

First, the symbols used in Fig.27 will be described. In the chart, $N_b$ is the number of blocks on the disk, b represents the block number being currently processed, and $T_b$ represents the time code allotted to block b. The time codes allotted to the blocks being currently processed and previously processed are represented by 'curr' and 'prev', respectively. $S_i$ and $E_i$ denote the start block number and end block number of the i-th partial program, respectively, while $B_i$ and $F_i$ denote the start time code and end time code, respectively. $A_b$ represents the content of the b-th entry in FAT 604. THR is a positive constant which is used to judge whether contiguous blocks have the continuous time codes. $N_p$ denotes the number of partial programs obtained by this block uniting process.

Next, the block uniting process will be explained with reference to the flowchart.

At Step S2701, block 0 is read and its time code $T_0$ is substituted for variable 'prev'. And a partial program No.0 is generated with its start block number $S_0$ set at 0 and start time code $B_0$ set at T0.

At Step S 2702, currently processed block number b and the processed partial program number are initialized at 1 and 0, respectively.

At Step S2703, the condition for ending the loop from Steps S2704 to S2710 is checked. In this case, the operation runs within the loop as long as the in-process block number b is less than the number of blocks $N_b$ on the disk and when it reaches $N_b$ or greater, the operation exits the loop and jumps to Step S2711.

At Step S2704, the currently processed block is read and its time code $T_b$ is set as variable 'curr' which represents the time code of the currently processed block.

At Step S2705, it is checked whether the time code 'prev' of the previous block and the time code 'curr' of the current block are continuous. If the difference between the time codes 'prev' and 'curr' is smaller than a certain constant THR, they are determined to be continuous. When the determination is affirmative, the operation goes to Step S2706, whereas when the determination is negative, the operation implements steps S2707, S2708 and S2709.

At Step S2706, b is substituted for FAT entry $A_{b-1}$ in RAM so as to link block b-1 with block b.

At Step S2707, the previous block, b-1, is determined to be the end block and its number is set as the end block number $E_i$ of the currently processed subject partial program, and the time code 'prev' of the previous block is set into the end time code $F_i$.

At Step S2708, the currently processed subject partial program number i is increased by 1.

At Step S2709, b is set to the start block number $S_i$ of the currently processed subject partial program and 'curr' is set as the start time code $B_i$.

At Step S2710, time code 'curr' is substituted for variable 'prev' and the processed subject block is incremented by 1.

At Step S2711, b-1 is set as the end block number $E_i$ of the in-process partial program and variable 'prev' is set to the end time code $F_i$. The number $N_p$ of the partial programs is set at i+1.

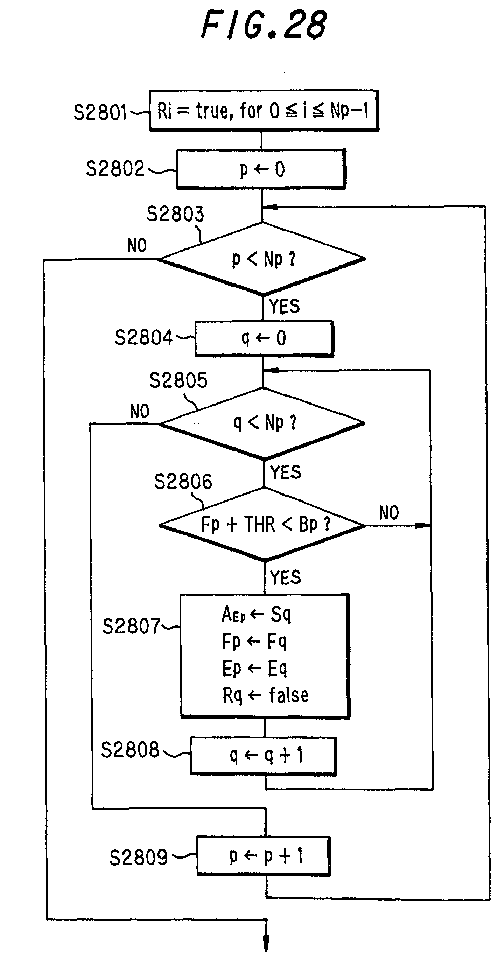

The second processing step is to reconstruct whole programs by connecting the partial programs obtained by the above block uniting process, picking up the partial programs having continuous time codes. Fig.28 shows the flowchart of this program reconstructing process. First, the symbols in the chart will be described. Designated at p is the number of a partial block being currently processed and 'q' is the number of a partial block number whose connection to the partial block designated by p should be checked. $R_i$ designates a flag which indicates whether partial program 'i' is the start of the program and here is called program start flag $R_i$. Other symbols are used in the same way as in the block uniting process.

Next, the description of this process will be described along with the flowchart shown in Fig.28.

At StepS2801. all flags Ri ($0 \le I \le N_p-1$) are initialized at variable 'true'.

At Step S2802, indexing variable p is initialized at 0.

At Step S2803, the condition for ending the loop from Steps S2804 to S2809 is checked. This loop is continued as long as the partial block number p is less than the number of partial blocks $N_p$.

At Step S2804, indexing variable q is set at 0.

At Step S2805, the condition for ending the loop from Steps S2806 to S2808 is checked. The loop is continued as long as variable 'q' is less $N_p$.

At Step S2806, the continuity between partial program p and partial program q is examined. If the difference between the end time code Fp of partial program p and the start time code $B_q$ of partial program q is smaller than constant THR, the two are determined to be continuous, and partial programs p and q are connected at Step S2807. This connection is carried out in the following manner.

First, the start block number $S_q$ of partial program p is substituted for FAT entry Aep, so as to connect them on FAT 604(Figs.25 and 26).

Next, end time code $F_p$ and end block number $E_p$ of partial program p are set at the same as those of partial program q.

Finally, since partial program q is not the start of the program, the program start flag $R_q$ is set at 'false'. At the end of Step S2802, only the flags $R_i$ of the partial programs corresponding to the starts of individual programs are set at 'true' . Therefore, the restoration is done by writing the start block numbers of the partial programs whose program start flags are set at 'true' into program map 603(Figs.25 and 26) in RAM. If management area 601(Fig.25) has not been physically broken, the recovery is completed by writing the management information in RAM onto the disk.

Application of the above technique to a video disk recorder that implements recording of MPEG coded video and audio data will be considered next.

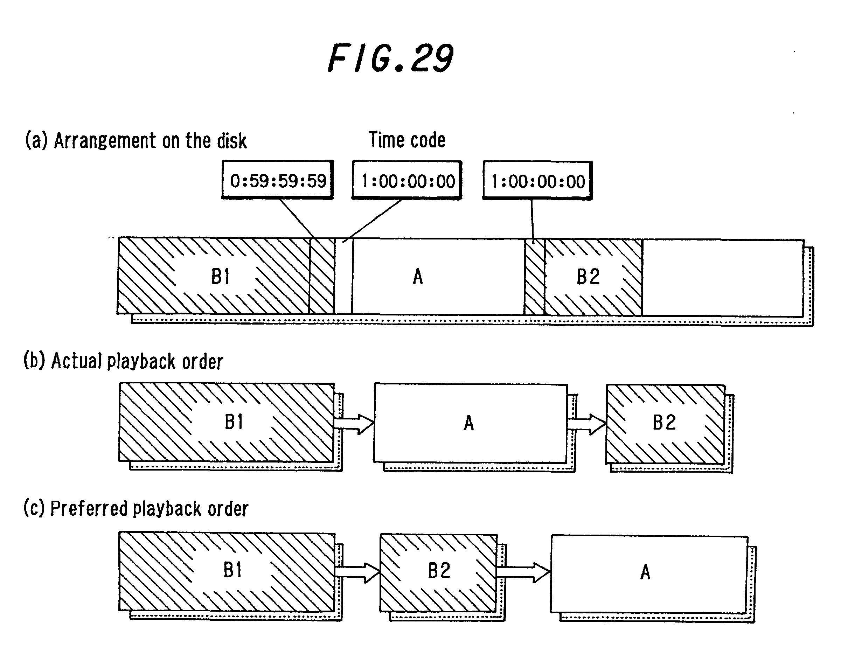

Time codes in the MPEG video standard are represented by relative times from the start of video data for each video program. Therefore, when plural video programs have been recorded on one disk, a plurality of video data having identical time codes exist on the disk. In such a case, there is a fear that the data cannot be recovered in the correct order. Fig.29 shows the example.

It is assumed that recorded data of video programs A and B are scattered on a medium, as shown in Fig. 29 (a). It is further assumed that the start frames of programs A and B2 have the same time code, e.g., 1:00:00:00. Under these conditions, when the contents are recovered by the aforementioned procedures, the result is that the programs are arranged in the order of B1-A-B2, or program A cutting into program B as shown in Fig. 29(b). This happens because the end frame of program B1 has the time code of 0:59:59:59 and the start frame of A has the time code of 1:00:00:00 so that programs B1 and A are determined to be continuous programs by the above process shown in Fig.25. Therefore, the programs of the original presentation order, in the order of B1-B2-A shown in Fig.29(c) or in the order of A-B1-B2 cannot be restored. The above problem occurs when partial recordings of video data scattered on the disk have no means of indicating their exact attributes to individual programs of video data.

On the other hand, the above problem can be resolved to a certain extent if the recorded date, instead of the relative time code, is given in addition to time information, hour : minute : second : frame, as disclosed in Japanese Patent Application Laid-Open Hei 11 No.162119. However, when data recorded by different devices exist on one disk, there is a possibility that different pieces of data having the same recording date might exist and hence the same problem may occur.

The present invention has been devised in view of the above prior art problems, and it is therefore an object of the present invention to provide a means based on which attributes of the partial recordings of data scattered on the disk can be determined so that even if the filesystem is broken the scattered pieces of data recorded on the disk can be recovered into the correct order of data reproduction.

Disclosure of Invention

In order to solve the above problems the present invention has the following features.

According to the recording method of the present invention, when a sequence of video or image data is recorded on the recording medium, the sequence is recorded on the recording medium by dividing it into a plurality of units and recording within each unit the information representing the ordinal position on the sequence in which the unit is to be reproduced and the information for providing distinction of a device by which the unit was recorded.

With this arrangement, even if there exist on the recording medium some units having information indicating the same ordinal position on each sequence in which the unit is to be reproduced, it is possible to make distinction between the sequences because the device ID unique to each device is allotted to each unit.

Further, according to the playback method of the present invention, as stated above, on the assumption that there exist on the recording medium some units having information indicating the same ordinal position on each sequence in which the unit is to be reproduce, the management information representing the playback order is recovered in such a manner that only when units that indicate that the ordinal information of the units for playback are continuous to each other and have the same identification for representing the distinction of a device, the units are determined to be continuous units.

The information representing the playback order on the sequence may be time information for reproduction of individual units or may be serial numbers representing the order in which the units are to be reproduced.

Brief Description of Drawings

Fig.1 is a block chart showing the configuration of one embodiment of the present invention;
Fig.2 shows the data arrangement in the disk in one embodiment of the present invention;
Fig.3 is a chart showing playback order management data in one embodiment of the present invention;
Fig.4 is a chart showing filesystem management information in one embodiment of the present invention;
Fig.5 is chart showing an overall configuration of an EUS file in one embodiment of the present invention;
Fig.6 is a chart showing the arrangement of a packet;
Fig.7 is a chart showing the arrangement of an EU in one embodiment of the present invention;
Fig.8 is a chart showing the arrangement of a VU in one embodiment of the present invention;
Fig.9 is a chart showing the arrangement of a PRU before audio dubbing in one embodiment of the present invention;
Fig.10 is a chart showing the arrangement of a PRU after audio dubbing in one embodiment of the present invention;
Fig.11 is a chart showing the position of a PRU in one embodiment of the present invention;
Fig.12 is a chart showing the arrangement of a UH-PKT in one embodiment of the present invention;

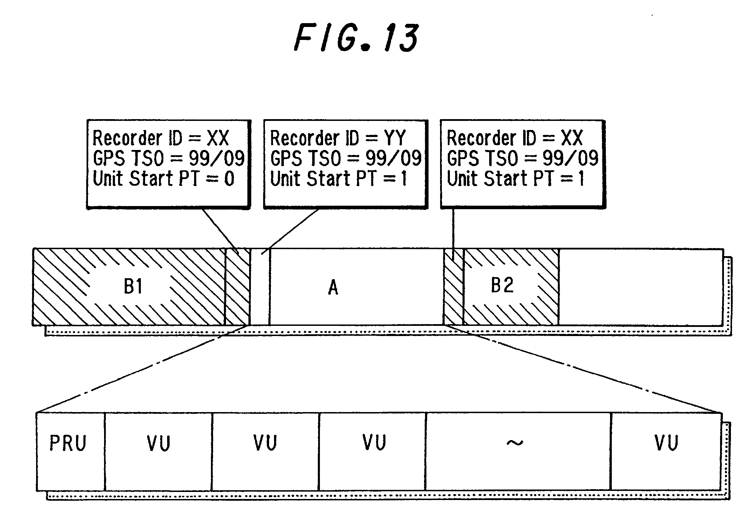

Fig.13 is a chart showing a sequence on a recording medium in one embodiment of the present invention;
Fig.14 is a chart showing the arrangement of <EUS management file> in one embodiment of the present invention;
Fig.15 is a chart showing the arrangement of <EUSI> in one embodiment of the present invention;
Fig.16 is a chart showing the arrangement of <Address LUT> in one embodiment of the present invention;
Fig.17 is a chart showing the arrangement of <PRU Information> in <Address LUT> in one embodiment of the present invention;
Fig.18 is a chart showing the arrangement of <VU Information> in one embodiment of the present invention;
Fig.19 is a flowchart for recording original data in one embodiment of the present invention;
Fig.20 is a flowchart showing the first half of the unit detection process for data recovery in one embodiment of the present invention;

Fig.21 is a flowchart showing the second half of the unit detection process for data recovery in one embodiment of the present invention;

Fig.22 is a flowchart showing the unit playback restoring process for data recovery in one embodiment of the present invention;

Fig.23 is a flowchart showing the filesystem restoring process for data recovery in one embodiment of the present invention;

Fig.24 is a diagram showing sequence management data for managing the playback order on the basis of partial sequences in one embodiment of the present invention;

Fig.25 is an illustrative view showing a conventional disk format;

Fig.26 is an illustrative view showing conventional management information;

Fig.27 is a flowchart for illustrating the block uniting process in the management information recovery procedures in a conventional disk recording method;

Fig.28 is a flowchart for illustrating the program reconstructing process in the management information recovery procedures in a conventional disk recording method; and

Fig.29 is an illustrative view showing the data playback order after the management information has been restored in a conventional disk recording method.


Best Mode for Carrying Out the Invention

Next, the embodiment of the present invention will be described with reference to the drawings.

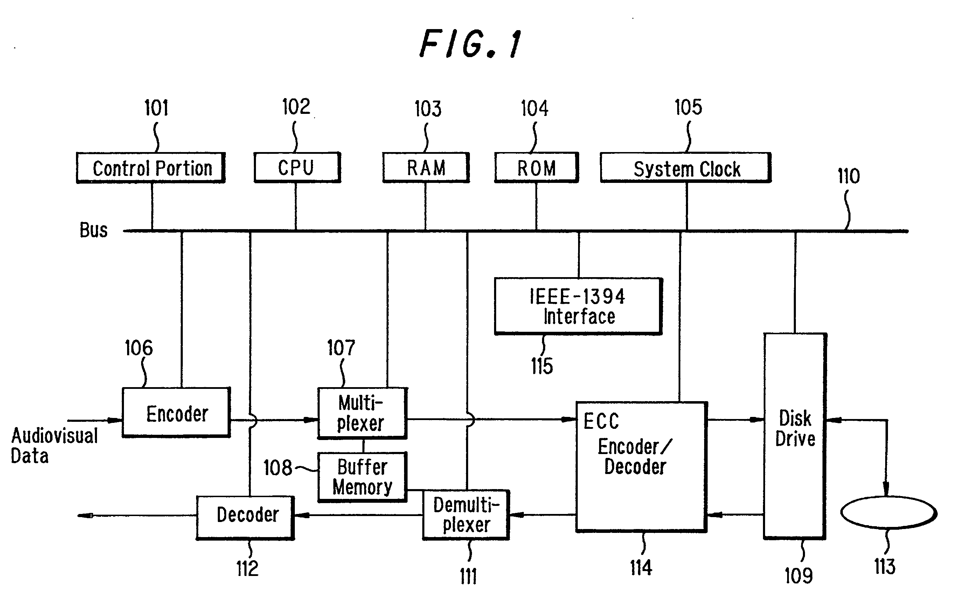

Fig.1 is a block diagram showing a configuration of a video disk recorder capable of audio-dubbing, according to first embodiment. As shown in Fig.1, this apparatus is comprised of a control portion 101, CPU102, RAM 103, ROM 104, system clock 105, buffer memory 108, encoder 106, multiplexer 107, disk drive 109, bus 110, demultiplexer 111, decoder 112, disk 113, ECC encoder/decoder 114 and IEEE-1394 interface 115.

Disk 113 is assumed to be a removable optical disk which is recorded and played back spirally from the periphery toward the center. One sector is made up of 2048 bytes and sixteen sectors form one ECC block for error correction. If any data in an ECC block needs to be rewritten, it is necessary to read out the whole ECC block containing that data, subject it to error correction, renew the target data, add error correction codes again to the data to reconstruct an ECC block and record it onto the recording medium.

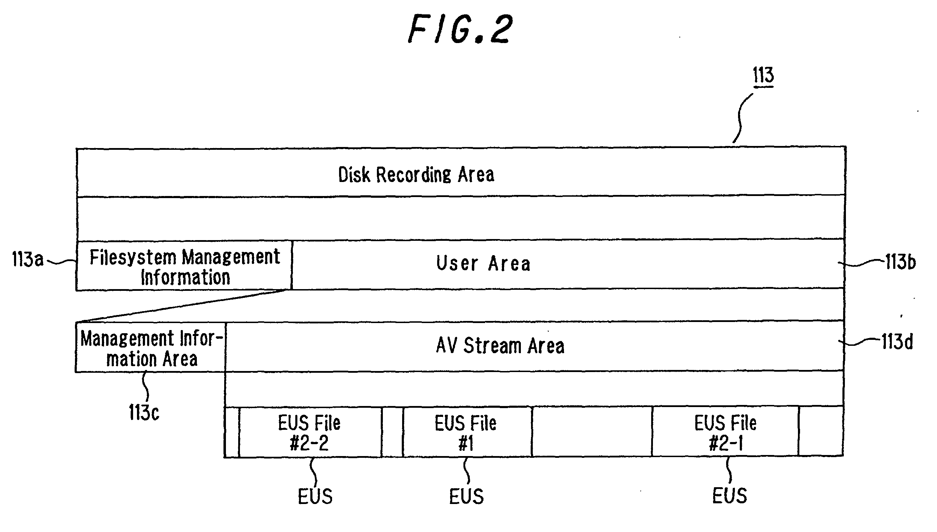

Fig.2 shows a disk 113 configuration. Arranged at the front end of disk 113 is filesystem management information 113a and the other part is allotted to a user area 113b in which files are managed individually by the filesystem.

User area 113b is separated into a management information area 113c and an AV stream area 113d.

Management information area 113c contains files relating to management information. AV stream area 113d contains EUS (editable unit sequence) files.

An EUS file is a file of a data stream unit in which a stream of video and audio data from the start of video recording to its end is recorded. This will be referred to merely as a sequence hereinbelow.

The files in management information area 113c include an EUS management file which contains information as to the EUS files.

In the present embodiment, access to each file is made via the filesystem managed by filesystem management information 113a. Therefore, it is possible to make access to a file such as an EUS file #2 in Fig.2, which is arranged scatteringly on the disk, by designating continuous logical addresses. In one word, one sequence can be constructed from a plurality of partial sequences. Access designated by a logical address is made sector-wise. The term 'address' in the following description should be understood to indicate a logical address unless otherwise specified.

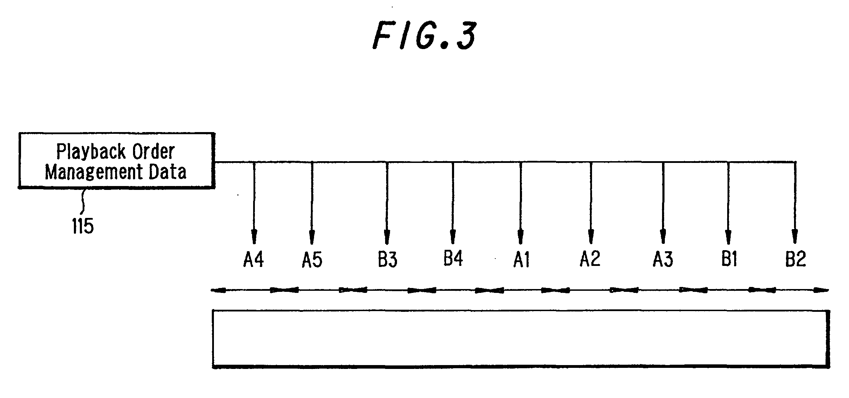

Referring to Fig.3, the arrangement of sequences on a recording medium will be described. As stated above, a plurality of sequences exist on a recording medium. In this case, sequences A and B exist and each sequence is divided into units of a predetermined size. Each unit is constituted of a plurality of sectors contiguous on the recording medium. In Fig.3, A4 represents the fourth unit of sequence A. Streams of units such as these are managed by playback order management data 115. The aforementioned filesystem management information 113a corresponds to this playback order management data 115.

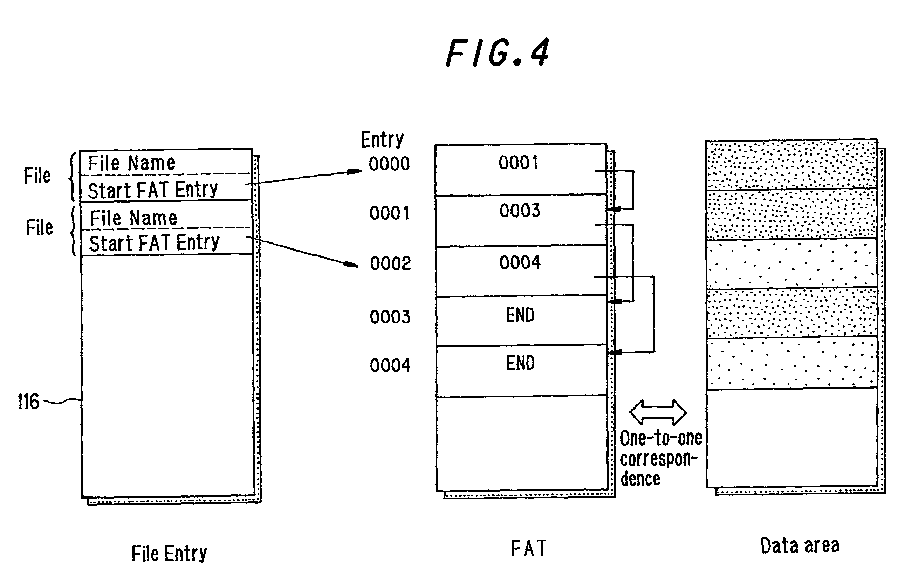

One example of filesystem management information 113a will be described referring to Fig.4. Almost similarly to Fig.26, a file entry 116 stores filenames. This assures that if the filename of a file is known, how the file is arranged on the disk can be known by following the start FAT entry corresponding to the filename and the FAT. Each FAT entry is composed of one sector or 2048 bytes.

This filesystem management information 113a(Fig.2) is generally recorded on the same recording medium as that to which the files are stored. However, this is not essential. That is, a single set of filesystem management information 113a may manage a plurality of recording media as long as it can recognize recorded locations over the plurality of recording media.

The encoding method used in this embodiment will be described. Original video data is encoded at variable rates around 5 Mbps by the MPEG-2 encoding scheme. For audio, the original data and dubbing data are both sampled at 48 KHz and encoded at a fixed rate of 2-channel 256 kbps by the MPEG-1/Layer II encoding scheme.

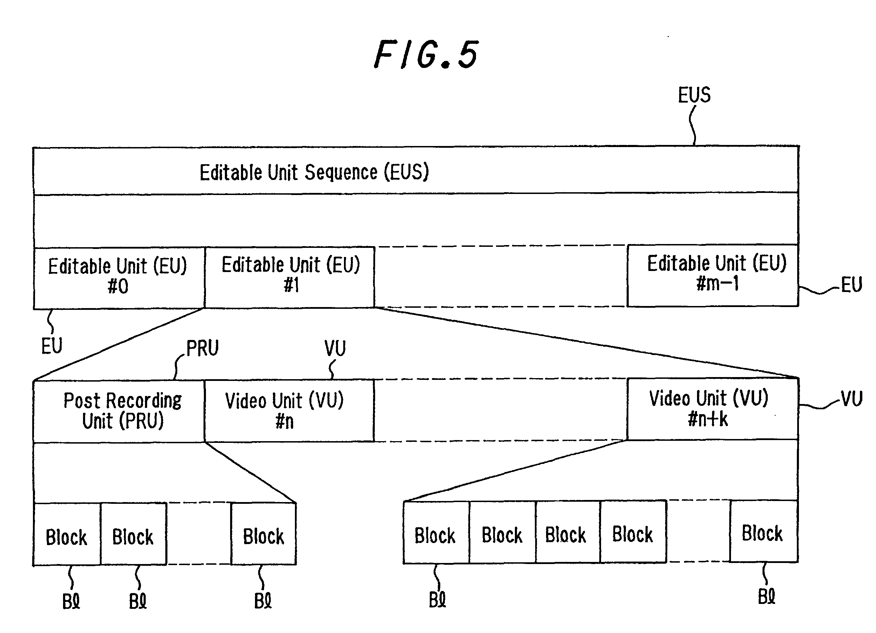

An EUS file(Fig.5) is a file that stores an EUS which is the unit of a multiplexed data stream of video and audio information. Fig.5 shows an overall structure of one EUS. Main elements of the EUS are summarized as follows.

Block B1: A unit having a fixed length of 2048 bytes corresponding to one sector. This is made up of video data defined by ISO/IEC 13818-2, audio data defined by ISO/IEC 13818-3 and other data and packetized into a PES packet defined by ISO/IEC 13818-1.

VU(Video Unit): A unit for random access during playback . This assures correct decoding of audio and video from partway in an EUS if an access is made from the start of a VU. This is composed of Blocks B1.

PRU(Post Recording Unit): An area for recording post recording data (audio dubbing data) associated with a plurality of VUs. This is composed of blocks B1.

EU (Editable Unit): This is made up of a plurality of VUs with zero or one PRU corresponding to those. One EU is recorded contiguously in the disk.

EUS(Editable Unit Sequence): A unit corresponding to a section of recording start (Rec Start) to recording stop(Stop) or to temporary cessation(Pause). This is made up of an integer number of EUs.

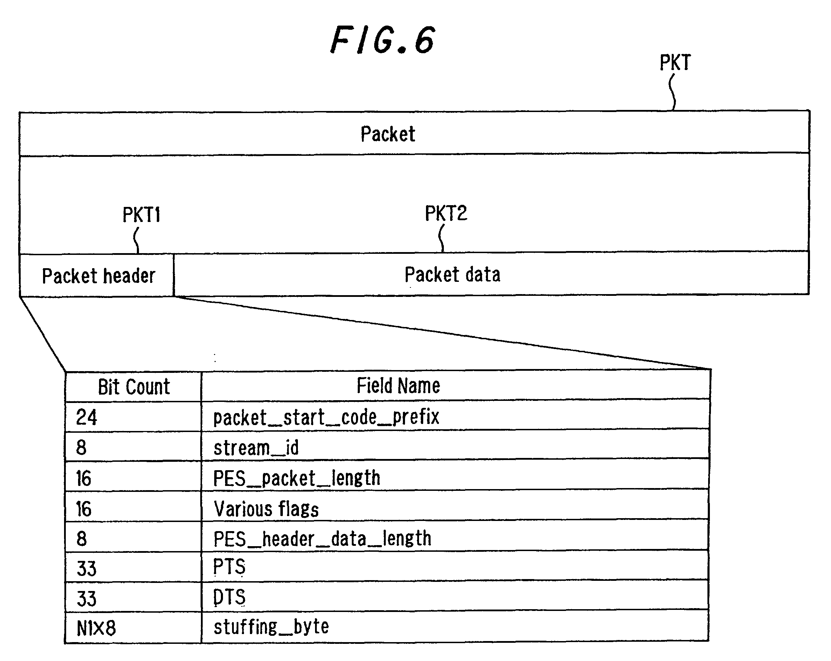

In the drawing, each block b1 has a fixed length unit of 2048 bytes and one block is stored in one sector. Principally, one block consists of one packet. The packet mentioned here should conform to the 'PES packet' defined by ISO/IEC 13818-1. Fig.6 shows the packet structure.

Packet PKT is composed of a packet header PKT1 storing the attributes etc. of the packet and a packet data PKT2 storing actual data such as video data etc.

The main information contained in packet header PKT1 is as follows.

<Packet-start-code-prefix> is the packet start code defined by ISO/IEC 13818-1.

<Stream-id> represents the type of the packet PKT.

<PES-packet-length> represents the size of data downstream of this field.

<PES-header-data-length> represents the size of the packet header PKT1.

<PTS(presentation time stamp)> is synchronization information between elementary streams such as multiplexed audio and video and other data and represents the timing when an access unit (one frame for video) whose leading end is contained in packet PKT is played back, with 33 bits of data that indicates the value of a 90 kHz clock count.

<DTS(decoding time stamp)> represents the timing when the access unit whose leading end is contained in that packet is decoded, in the same time axis as <PTS>.

<Stuffing-bytes> is used to adjust the size of packet PKT as described as follows.

If the packet PKT does not fill 2048 bytes of data and has a shortage of less than 7 bytes, <Stuffing-bytes> are inserted into the packet header PKT1. In contrast, if the shortage is 7 bytes or greater, a padding packet equivalent to the shortage is placed at the end of the packet. The stuffing bytes and the padding packet are so-called dummy data which has no effect on actual operations. Types of packets PKT used in this embodiment are summarized as follows:

V-PKT (Video Packet): A packet storing video data defined by ISO/IEC 13818-2

A-PKT (Audio Packet): A packet storing audio data defined by ISO/IEC 13818-3

P-PKT (Padding Packet): A padding packet defined by ISO/IEC 13818-1

UH-PKT (Unit Header Packet): A packet storing the header relating to a VU or PRU

The formats for V-PKT, A-PKT and P-PKT conform to those defined by ISO/IEC 13818-1. The formats of other packets will be described later. Blocks b1 constituting an EUS are summarized as follows:

V-BLK (Video Block): A block storing a V-PKT

A-BLK (Audio Block): A block storing an A-PKT

P-BLK (Padding Block): A block storing a P-PKT

UH-BLK (Unit Header Block): A block storing a UH-PKT

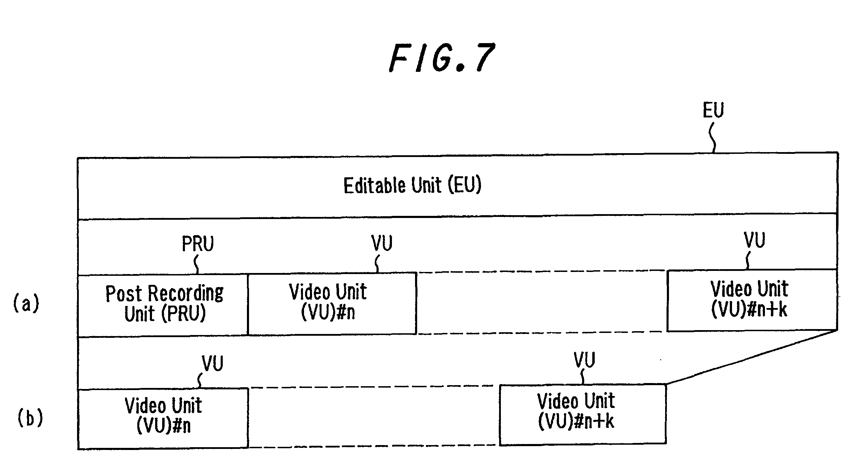

Next, EU will be described. Fig.7 shows the EU structure.

One EU includes an integer number, equal to one or greater, of VUs and zero or one PRU. VUs constituting one EUS all have the same presentation time. An exception is the last VU in the EUS which may be shorter than the other VUs. That is, the VUs in one EUS always have the same playback time. Here, the presentation time of a VU containing video data is defined by the number of video fields or video frames contained in the VU multiplied by the video field period or video frame period.

EUs constituting one EUS should all have a PRU(Fig.7(a)) or should all have no PRU(Fig.7(b)).

The number Nvu of VUs constituting one EU should be constant in one EUS, except the last EU in the EUS.

That is, in one EUS, the presentation time interval of every EU is constant. For EUSs having no PRU(Fig.7(b)), Nvu is set equal to 1. For EUSs having PRUs(Fig.7(a)), Nvu should fall within the following range:

[Formula 1]

$$ceiling\left(\frac{2\times(Tk+Tv)\cdot Rs}{(Rs-Ro-Ra\cdot Nch)Tpv}\right)\leq Nvu \leq floor\left(\frac{10\sec.}{Tpv}\right)$$

where Tpv is the presentation time per VU, Tv is the wait time for disk rotation, Tk is the time required to jump from the track being currently read to the track in the dubbing area, Rs is the data transfer rate from the disk, Ro is the bit rate for the entire EUS, Ra is the bit rate per channel of the audio dubbing and Nch is the number of channels of audio dubbing. In the above formula, ceiling(x) is the function determining the least integer equal to or greater than x and floor(x) represents the function determining the greatest integer equal to or smaller than x. The reason why the minimum value of Nvu is determined based on the data transfer rate and other factors for EUSs with PRUs is that unless the time for each EU is long enough, the proportion of the over-head time or the time the head is moved from the current reading position to the audio dubbing area when audio dubbing is carried out sequentially would become large, which would make it impossible for data reading to keep up with the display, causing breaks in video and audio reproduction.

Next, description will be made of VUs.

One VU includes video data made up of a sequence-header followed by an integer number, equal to one, of GOPs(group of picture) each GOP having an associated GOP header at the front and audio data made up of an integer number of AAUs(audio access units) in synchronization with the video data.

GOP is the unit of MPEG video compression and is made up of a plurality of fields or frames.

AAU is the compressed data of an audio sample segment, segmented every 0.024 sec.

GOP and AAU both need to be decoded from the leading end of their unit. Since a VU includes an integer number of GOPs and AAUs, each VU can be individually reproduced. The number of video fields per VU should be set at 24 to 60 for NTSC(National Television System Committee) and at 20 to 50 for PAL(Phase Alternation by Line).

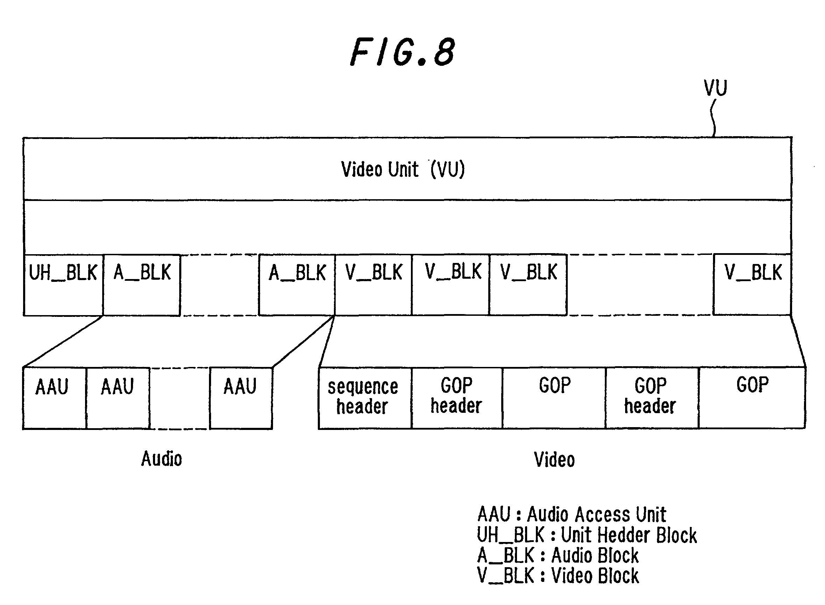

As shown in Fig.8, one VU has a Unit header block(UH-BLK) at its front and a series of aforementioned A-BLKs storing audio data subsequently and a series of aforementioned V-BLKs storing video data at the end.

The number of A-BLKs should be large enough to store the aforementioned audio data. When some area remains in the last A-BLK, this can be adjusted using the P-PKT or stuffing bytes as mentioned before. A V-BLK should also be configured similarly.

Next, description will made of PRU.

PRU is an area storing audio data corresponding to an integer number, equal to or greater than one, of VUs. There is zero or one PRU in one EU. One PRU is sized so as to be made of a minimum integer number of ECC blocks which can contain audio data associated with the presentation time per EU and a PRU header block. The number of ECC blocks which make PRU, denoted by NPRU,ECC is defined as follows:

[Formula 2]

$$N_{PRU,ECC} = ceiling\left(\left(1+ceiling\left(\frac{Ra\cdot Nch\cdot Tpv}{2048-14}\right)\times Nvu\right)/16\right)$$

Here, the audio data to be recorded in a PRU is recorded at the same data rate and at the same sampling frequency as the audio of VUs in the EU to which the PRU belongs.

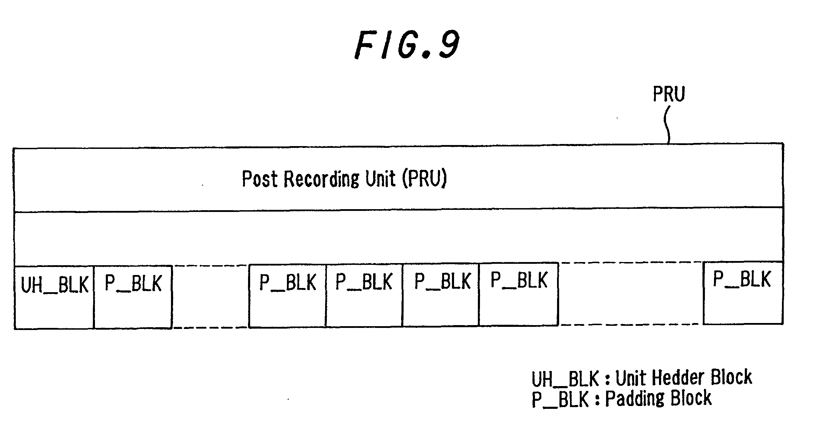

Fig.9 shows the PRU structure immediately after recording of original data. One unit header block(UH-BLK) is recorded at the front and the remaining area is filled up with padding blocks (P-BLKs). That is, no audio data has been recorded at the point immediately after the original data was recorded.

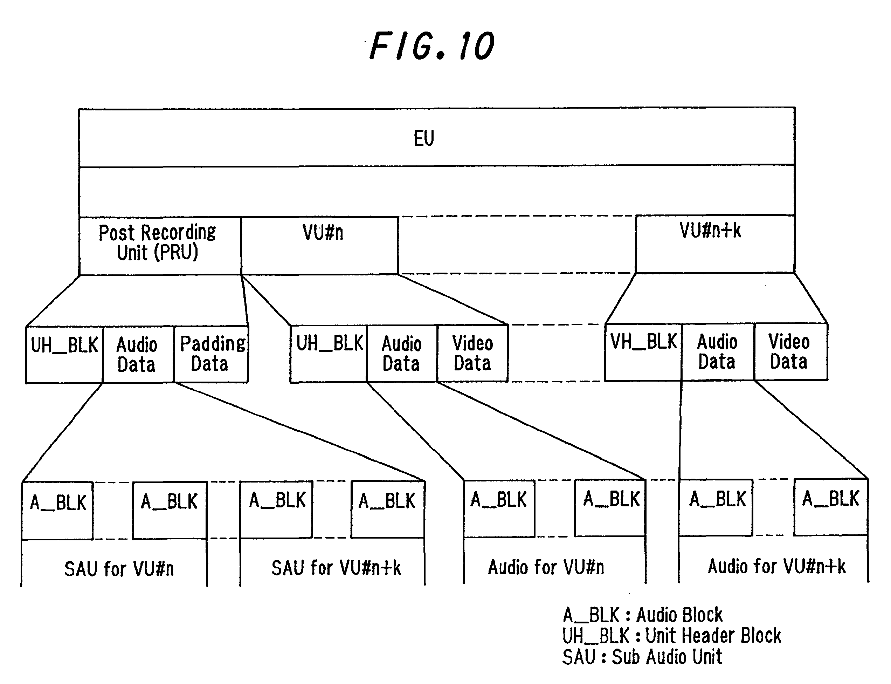

Fig.10 shows the structure of a PRU after audio dubbing has been performed on the PRU. One unit header (UH-BLK) is recorded at the front, and a series of A-BLKs of audio data synchronized with the EU are recorded after the header. The remaining area is filled up with padding data (P-BLKs). In this recording, A-BLKs in the PRU are made to be as many in number as the total number of A-BLKs in each VU in the same EU. Further, audio data of post-recording is recorded so that A-BLKs in the PRU are arranged in the same order as and have the same PTS values as the A-BLKs in each VU in the same EU. That is, the PRU after audio dubbing contains a series of A-BLKs corresponding to the A-BLKs contained in individual VUs. Such a series of A-BLKs in PRU associated with VUs is called a SAU(sub audio unit). Needless to say, SAU should have an integer number of AAUs as in the VU.

The arrangement of the PRU in an EU will be described.

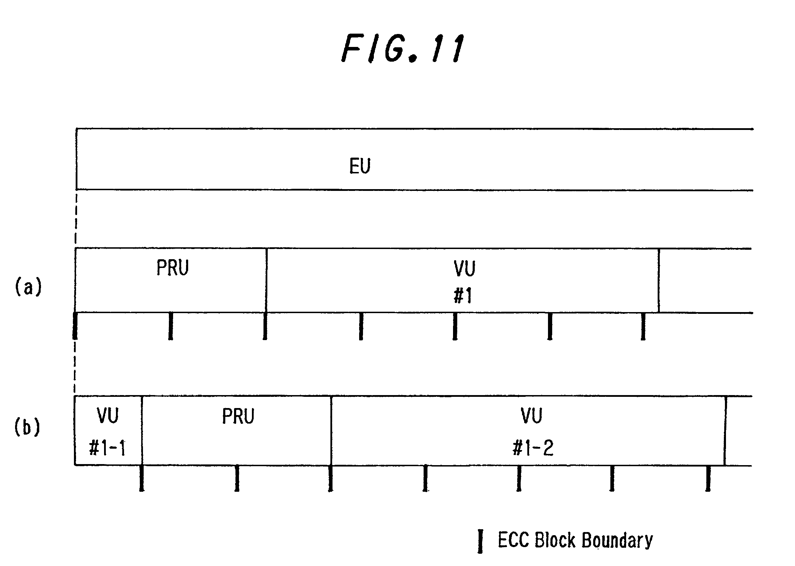

The PRU is placed at an ECC boundary within the first 15 sectors from the start of the EU to which the PRU belongs. In other words, the PRU is placed at the ECC boundary appearing first. For example, when the front of an EU corresponds to an ECC block boundary, the PRU is placed immediately after the front of the EU as shown in Fig. 11(a) When the front of the EU does not correspond to an ECC block boundary, the PRU is placed at the ECC block boundary within the first 15 logical blocks from the EU boundary or at the ECC block boundary appearing first in the EU. In this case, the VU at the front of the EU is segmented by the PRU.

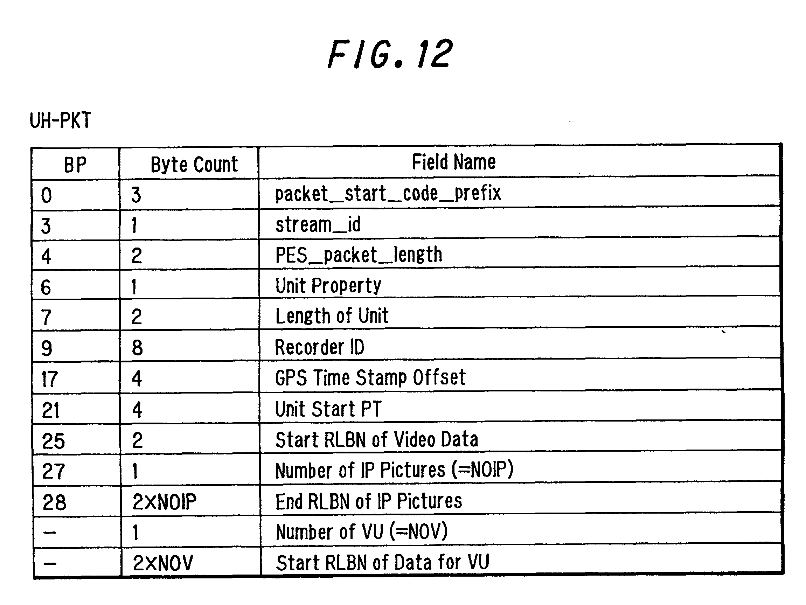

Fig.12 shows the structure of a UH-PKT. BP(byte position) in the chart is the relative byte position from the top, and the byte count shows the byte size of each field.

Fields <Packet-start-code-prefix>, <stream-id> and <PES-packet-length> are as described above.

A field <Unit Property> is a one-byte bit field and stores information as to the unit (PRU or VU) to which this unit header belongs. This includes <First VU of EU> and a field <Recorder ID Format>.

Field <First VU of EU> is set at 1 if the unit including that UH-PKT is the first VU in the EU and it is set at 0 otherwise.

Field <Record ID Format> is a two-bit field and indicates storing a MAC(media access control) address(device ID on Ethernet) to the field <Record ID > when this field is 01b(xxb indicates that xx is a binary number) and storing a GUID(global unique ID: a device ID on IEEE 1394) to the field <Record ID > when this field is 10b. Field <Record ID> represents the ID of a device by which the unit was recorded.

<GPS Time Stamp Offset> is a field for storing the date at which the EUS, to which the unit belongs, started to be recorded and is denoted in seconds from January 6, 1980, 00:00 (UTC: Universal Time Coordinated) by a 32 bit integer without sign.

<Unit Start PT> represents the PTS value of the start V-PKT in the unit to which the UH-PKT belongs, of which the most significant bit is omitted. From now on, the format in which the most significant bit of a PTS is omitted will be called PT format.

<Length of Unit> represents the number of blocks in the unit to which this unit header belongs.

<Start RLBN of Video Data> represents the number of blocks from the front of the unit to the start of video data.

Since a UH-PKT is disposed at the front of a sector independent from other data and has a particular bit pattern of <packet-start-code-prefix> and <stream-id(0000 0000 0000 0000 0000 0001 1011 1101b)> at its front, it can be easily detected by scanning the sectors sequentially even when the filesystem has been broken.

Further, since information representing the relationship between units, such as time information and the like is given to the packets (UH-PKTs) which are independent from the AV data, it is possible to determine the relationship between units without the necessity of decoding the AV data.

Since a UH-PKT includes a time record(<GPS Time Stamp Offset>) at which the EUS started to be recorded, it is possible to distinguish between units which were recorded at the same time on different days. Further, since the ID (<Recorder ID> of the device which was used for recording the unit is recorded in the UH-PKT, it is possible to make a distinction even if units recorded at the same time on the same date by different devices exist on the same disk. Because the MAC address or GUID to be recorded in <Recorder ID> exists as a unique worldwide address, being unique to the recording device(more precisely, unique to the network interface unit), units recorded by different devices must have different <Recorder ID> added thereto. In sum, partial pieces of video data (VUs and PRUs) recorded in this format if they constitute the same video data(EUS), always have identical <Recorder ID> and <GPS Time Stamp Offset> at the same time; if they belong to different sequences of video data, they have different values of at least one of the two.

Thus, though the arrangement of video data as in Fig.29 has been difficult to recover by the prior art, if program B1 and program A are constituted from different sequences of video data, there is difference in either of <Recorder ID> or <GPS Time Stamp Offset>(GPS TSO in the drawing) between programs B1 and A so that it is possible to easily make a correct decision that program B1 and program A belong to different partial sequences of video data.

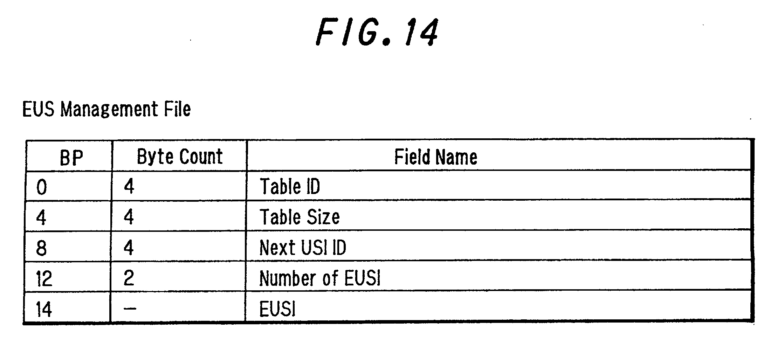

Fig.14 shows the structure of the EUS management file.

The EUS management file is one that stores the information for managing all the EUS files recorded on the disk. Herein, the only items essential to description of the present embodiment will be described.

A field <Number of EUSI> represents the number of EUS files managed by this file.

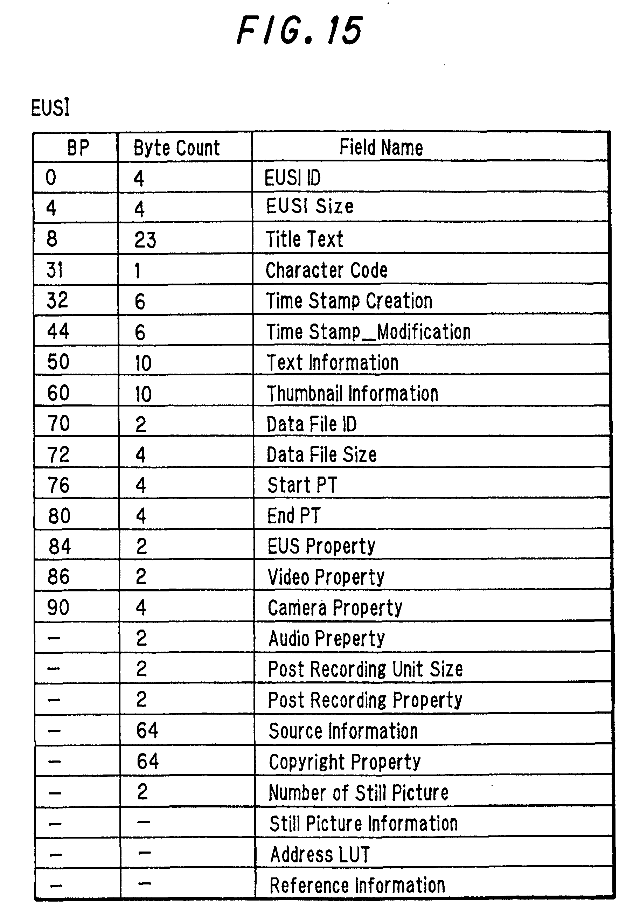

A field <EUSI(EUS Information)> represents the information as to an individual EUS file, hence there are as many fields <EUSI> as <Number of EUSI>. Detailedly, <EUSI> is configured as shown in Fig.15. In the drawing, <Start PT> and <End PT> represent the start PTS and end PTS in the EUS file managed by this <EUSI>, of which the most significant bit is omitted. From now on, the format in which the most significant bit of a PTS is omitted will be called PT format.

<Post Recording Unit Size> represents the size of the PRU in the EUS file managed by this <EUSI>.

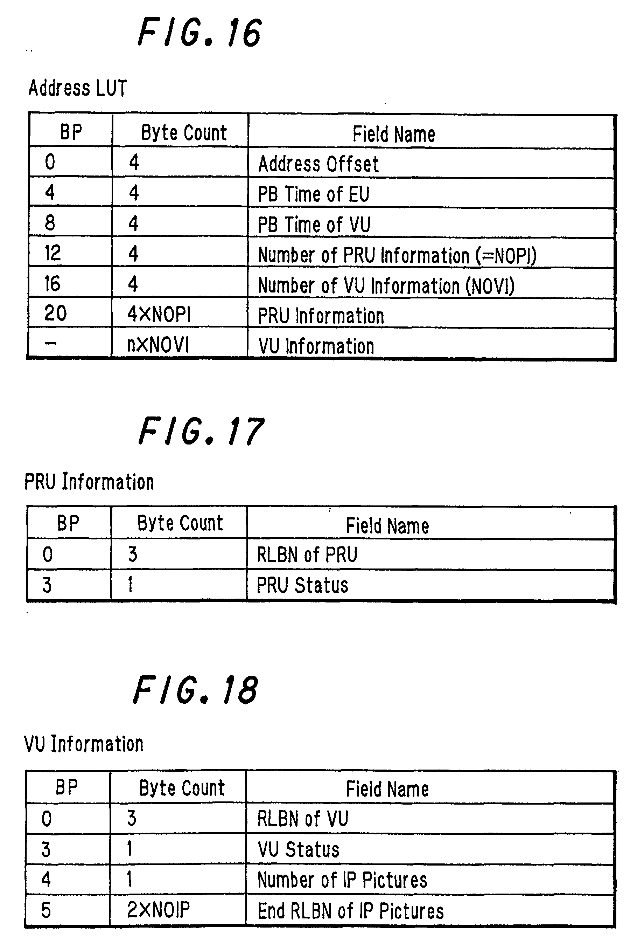

< Address LUT (lookup table) > is a table with which, based on the time code described in PT format, the address at which data corresponding to the time code is recorded is searched for. Fig.16 shows the arrangement of <Address LUT>.

A field <PB Time of EU> represents the presentation time per EU in 1/90000 [sec.] units on the same scale as the PT format.

Similarly, <PB Time of VU> represents the presentation time per VU in 1/90000 [sec.] units.

<Number of PRU Information> represents the number of <PRU Information> in <Address LUT> and also represents the number of PRUs in the EUS.

Similarly, <Number of VU Information> represents the number of <VU Information> in <Address LUT> and the number of VUs in the EUS.

Fig.17 shows the content of <PRU Information>. In the chart, <RLBN of PRU> represents the address of the PRU managed by the <PRU Information>.

Fig.18 shows the content of <VU Information>. In the chart, <RLBN of VU> represents the address of the VU managed by the <VU Information>.

Next, the procedure of determining a PRU address corresponding to a certain time code PT using <Address LUT> will be described.

First, the relative PT is determined by subtracting <Start PT> of EUSI from a time code PT. This relative PT is divided by <PB Time of EU> and dropping digits after the decimal point to determine the index of <PRU Information> that manages the PRU corresponding to the PT.

Next, the address given by the <RLBN of PRU> in the <PRU Information> designated by the index represents the address of the PRU corresponding to the target PT. The address of the VU corresponding to the time PT is similarly obtained by subtracting <Start PT> from the time code PT, dividing it by <PB Time of VU> and dropping digits after the decimal point to determine the index and referring to the <RLBN of VU> in the <VU Information> designated by the index. The reason why the start address of a VU or PRU can be obtained by a simple operation as above is that the presentation time per EU and that per VU are set constant.

Next, the processing sequence for performing recording in the above disk format will be described hereinbelow. In the following description, it is assumed that video data is recorded using NTSC, VU is composed of one GOP made up of 30 fields and the maximum bit rate for video is 8 [Mbps]. It is further assumed that the disk transfer rate Rs is 12 [Mbps], the maximum time Tk for the jump to audio dubbing area is 0.3 [sec.] and the maximum wait time Tv for disk rotation is 0.2 [sec.]. The audio bit rate and the number of audio channels are 0.125 [Mbps/channel] and 2 [channels], respectively and commonly used for original recording and audio dubbing. Under these conditions, the presentation time Tpv per VU of the above specifications of the GOP takes up about 0.5 sec. The range of the VU count Nvu per EU, to which audio dubbing can be performed is $7 \leq Nvu \leq 20$. In the present embodiment, Nvu = 8, that is, the presentation time per EU is set at about 4 sec.

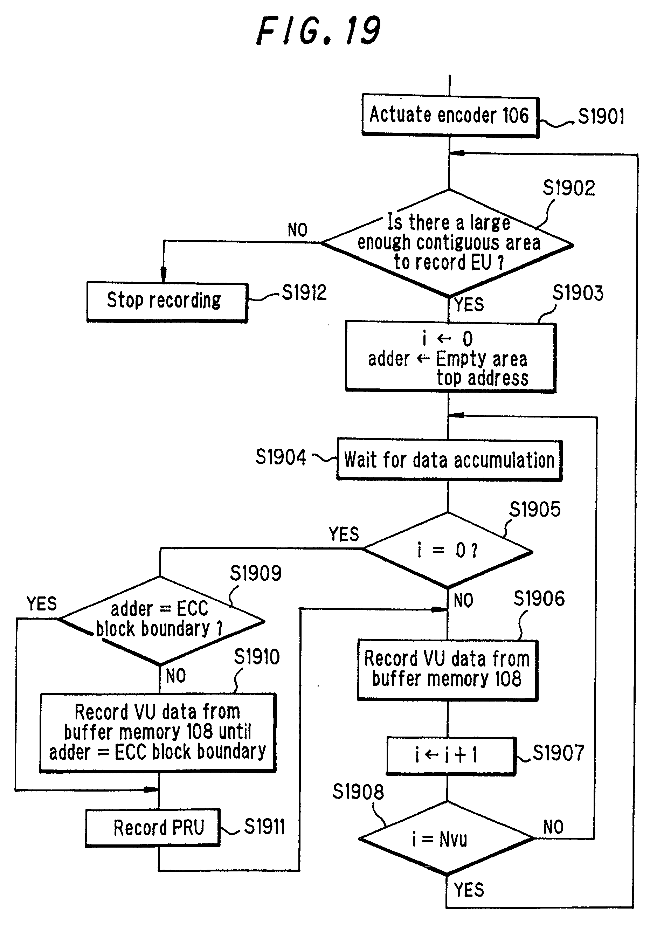

The processing sequence of CPU 102 for recording an original program will be described with reference to Fig.19. It is assumed that the EUS management file and filesystem management information have been loaded from the disk into RAM 103.

CPU 102 actuates encoder 106(Step S1901) and then checks based on the filesystem management information if there is a large enough continuous area to record data of 1 EU on the disk(Step S1902). If no, the recording is stopped(Step S1912).

At the above Step S1902. if there is a large enough area, a variable i, which represents at which position in the EU the VU to be recorded is, is reset to 0, the top address of the empty area is stored as a variable addr (Step S1903).

Next, notification from multiplexer 107 that data of 1 VU has been buffered into buffer memory 108 is waited for (Step S1904). When the notification is received from multiplexer 107, variable i is checked(Step S1905). When variable i is 0, it is checked if variable addr corresponds to an ECC block boundary(Step S1909). If the variable does not correspond to an ECC block boundary, the VU data in buffer memory 108 is recorded onto the disk until the next ECC block boundary (Step S1910).

Then, a PRU is created with a UH-PKT and P-PKTs in RAM 103 and is recorded onto the disk(Step S1911).

Next, the VU data at the top of buffer memory 108 is recorded onto the disk(Step S1906). After this recording is completed, variable i is incremented(Step S1907). If variable i is smaller than variable Nvu representing the number of VUs in the EU, the operation jumps to Step 1904 (Step S1908). If the variable i is not equal to Nvu, the operation goes to Step S1902.

The above sequence is repeated EU by EU until a stop command is given from control portion 101 or until insufficiency of continuous area in the disk occurs.

In parallel with the above sequence of CUP 102, multiplexer 107 receives video and audio data from encoder 106, adds PTS etc., to the data and packetizes it so as to be stored into buffer memory 108. Multiplexer 107 receives from CPU 102 the record starting date and GUID allotted to IEEE-1394 interface 115 and constructs the UH-PKT(Fig. 12). When V-PKTs for one GOP and A-PKTs synchronized with it have been stored in buffer memory 108, the multiplexer notifies CPU 102 that data for one VU has been buffered.

Now, the process to be implemented when management area 602 has been broken will be described.

The recovery is performed by reading the data sequentially from the beginning of the disk, in the order of the unit detecting process of detecting VUs and PRUs by locating UH-BLKs(Figs.8 and 9), the unit playback order restoring process of restoring the order of VUs, and the filesystem reconstructing process of reconstructing the filesystem based on the restored playback order of VUs. A detailed description follows.

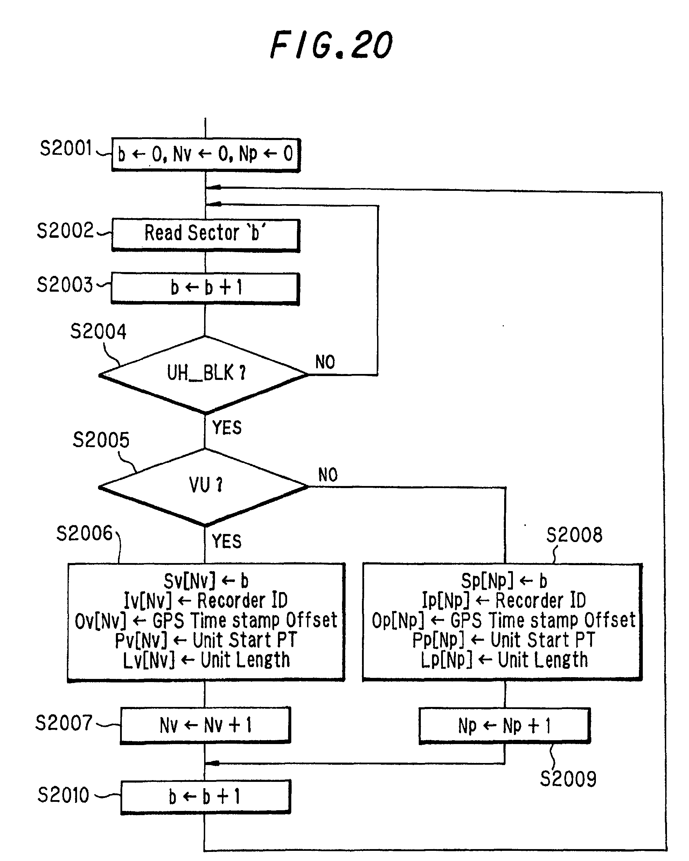

Fig.20 is a flowchart showing the unit detecting process. First, description of the symbols in the drawing will be described. The symbol 'b' designates the number of a sector being processed. $N_v$ and $N_p$ represent the numbers of detected VUs and PRUs, respectively. $S_v[i]$, $I_v[i]$, $O_v[i]$, $P_v[i]$ and $L_v[i]$ represent the starting sector number of the VU detected at the i-th position, <Recorder ID>, <GPS Time Stamp Offset>, <Unit Start PT> and <Unit Length>, respectively. $S_p[j]$, $I_p[j]$, $O_p[j]$, $P_p[j]$ and $L_p[j]$ represent the starting sector number of the PRU detected at the j-th position, <Recorder ID>, <GPS Time Stamp Offset>, <Unit Start PT> and <Unit Length>, respectively.

Next, the unit detecting process will be described along with the flowchart in Fig.20.

To begin with, b, $N_v$ and $N_p$ are all set at 0(Step S2001).

Then, sectors are scanned until a UH-BLK is detected(Step S2002 to Step S2004). A detection of a UH-BLK is determined by checking whether the front part of the read sector has the particular bit sequence(<packet-start-code-prefix>,

<stream-id>).

Subsequently, it is judged whether the unit managed by that UH-BLK is a PRU or VU(Step S2005). Here, if <Start RLBN of Video Data> is not 0, the unit is determined to be a VU. When it is determined to be a VU, the operation goes to S2006 whereas the operation goes to Step S2008 when it is determined to be a PRU.

At Step S2006, among the various fields of the UH-BLK, the values of <Recorder ID>, <GPS Time Stamp Offset>, <Unit Start PT> and <Unit Length> are stored into the variables as to the Nv-th VU, $I_v[i]$, $O_v[i]$, $P_v[i]$ and $L_v[i]$, respectively.

At Step S2007, $N_v$ is incremented.

At Step S2008, the values of the fields of the UH-BLK are stored into the variables as to the $N_p$-th PRU, respectively.

At Step S2009, $N_p$ is incremented.

At Step S2010, b is incremented and the operation goes to Step S2002.

By the above process, information of all the VUs and PRUs recorded on the disk can be obtained.

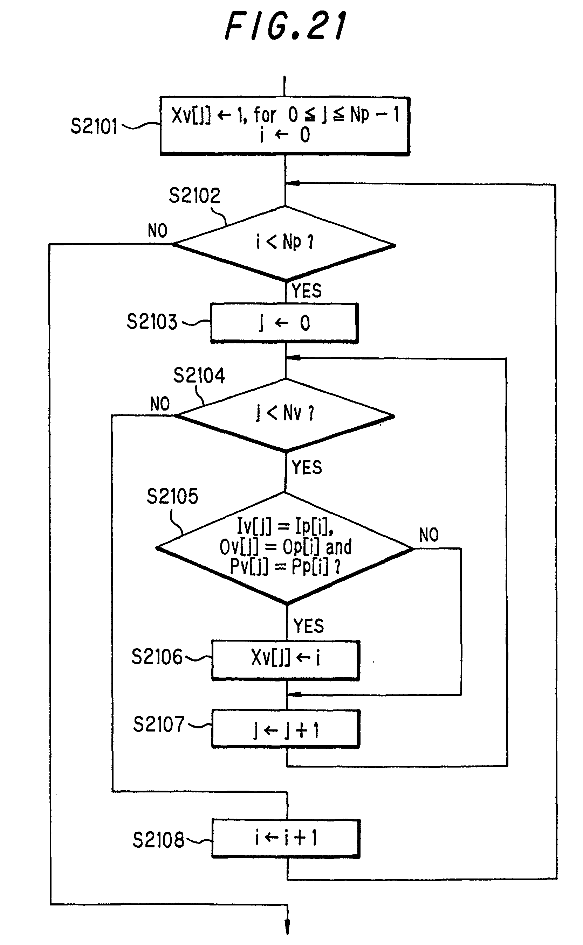

Next, using the information of all the VUs and PRUs recorded on the disk, VUs and PRUs are united into groups, EU by EU. Fig.21 shows the flowchart of the uniting process of VUs and PRUs.

First, extra symbols will be described. $X_v[j]$ represents the PRU number corresponding to the j-th VU. When this value is -1, this indicates that there is no corresponding PRU.

Next, the process of uniting VUs and a PRU will be described following the flowchart in Fig.21.

First, the variables are initialized(Step S2101). Steps S2102 to S2108 are repeated by incrementing index i indicating a PRU as long as i is less than $N_p$. Index j indicating a VU is initialized(Step S2103), and Steps S2104 to S2107 are repeated as long as j is less than $N_v$.

At Step S2105, among the variables, the i-th PRU and j -th VU are compared as to the variables indicated by <Recorder ID>, <GPS Time Stamp Offset> and <Unit Start PT>. If all of them coincide with each other, i is set as $X_v[j]$. By this process, it becomes possible to know the PRU to be reproduced in time with the j-th VU, by referring to the value of $X_v[j]$.

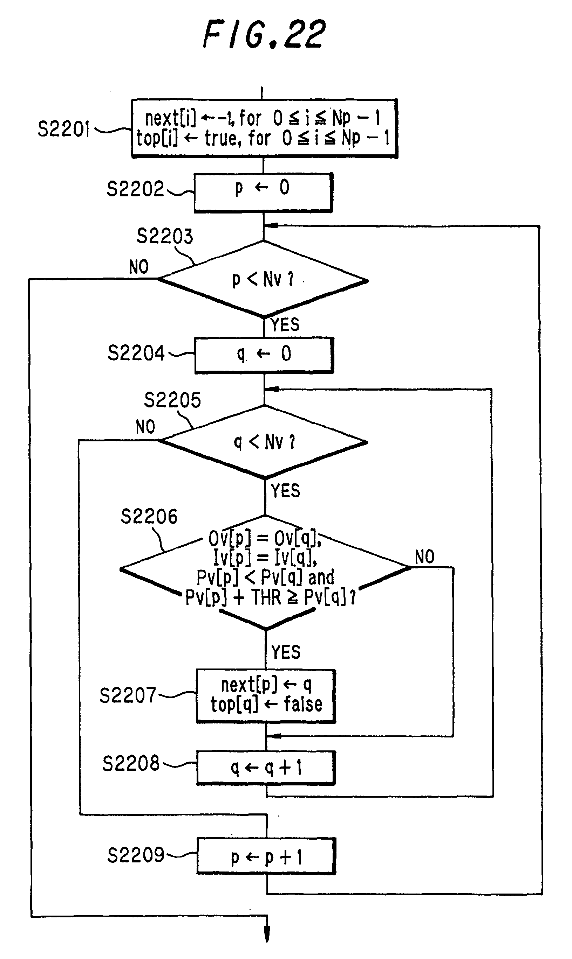

Next, Fig.22 shows the flow of the unit playback order restoring process for restoring the order of VUs. Newly introduced symbols will be described. Stored into next[i] is the VU number following the i-th VU. If this value is -1, this indicates that there is no VU following. Top[i] is a flag that indicates whether the i-th VU should be located at the start of the sequence(EUS). If this is 'true' the VU is located at the front and if this is 'false' the VU is not located at the front. The symbols p and q denote two VUs being currently checked as to continuity, specifically, the preceding and subsequent VU numbers, respectively. THR is a threshold based on which the continuity between VUs are determined. In the present embodiment, THR is set at 90000, which means to express 1 second specified as an upper limit of presentation time per VU, in 1/90000 [sec.] units.

Next, the unit playback order restoring process will be described along with the flowchart in Fig.22.

At Step S2201, next[i] and top[i] are initialized so as to assume that all the VUs have no following VU and are located at the front of the EUS.

At Step S2202, p is initialized.

At Step S2203, the condition for ending the loop from Steps S2204 to S2209 is checked.

At Step S2204, q is initialized.

At Step S2205, the condition for ending the loop from Steps S2206 to S2208 is checked.

At Step S2206, it is checkedwhether the p-th VU is followed by the q-th VU. When $O_v[p]$ and $O_v[q]$ coincide to each other, so do $I_v[p]$ and $I_v[q]$, and $P_v[p]$ is smaller than $P_v[q]$ and $P_v[q]$ is equal to or smaller than $P_v[p]$ + THR, the p-th VU is determined to be followed by the q-th VU, and the operation goes to Step S2207. When the conditions at Step S2206 do not hold, the operation goes to Step S2208.

At Step S2207, in order to indicate that the p-th VU is followed by the q-th VU, q is set into nest[p]. Further, the q-th VU is not one located at the front of the EUS, 'false' is set as top[q].

By the above procedures, it is possible to obtain correct playback order of VUs by tracing VUs, starting from the VU with its variable top [ ] being 'true' and referring to next [].

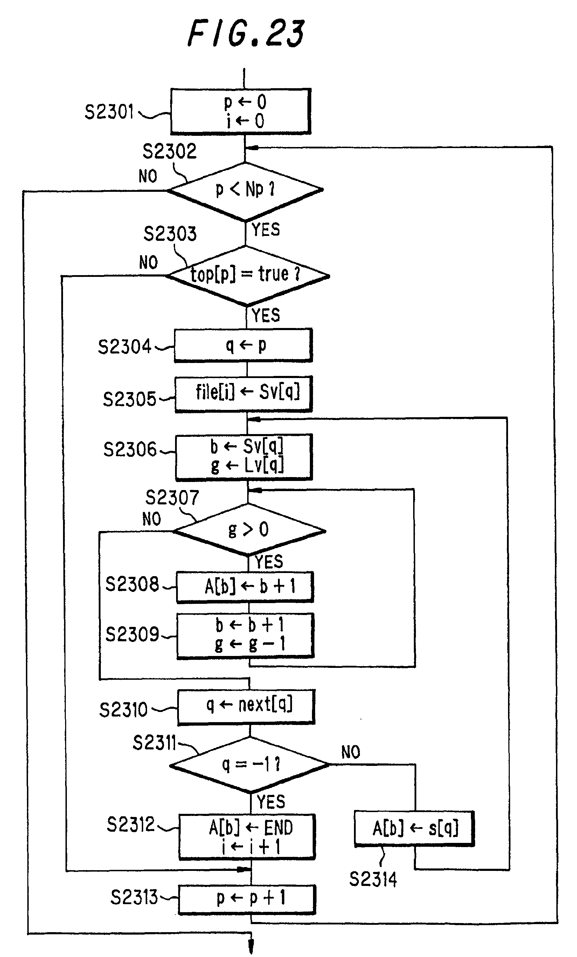

In the filesystem restoring process of restoring the filesystem based on the restored playback order of the VUs, restoration of the filesystem is implemented using the continuity information of the VUs obtained from the above-described unit playback order restoring process. Fig.23 shows the flow of filesystem restoration. Newly introduced symbols will be described. File[i] represents the start FAT entry of the i-th file in the file entry. A[b] represents the value in the b-th FAT entry.

Next, the filesystem restoring process will be described along with the flowchart shown in Fig.23.

First, VU index variable p and file entry index variable i are initialized(Step S2301).

At Step S2302, the condition for ending the loop from Steps S2303 to S2314 is checked.

At Step S2303, it is checked whether the p-th VU is the one which is located at the front of the EUS. If it is at the front, the operation goes to Step S2304, or skips to Step S2313 otherwise.

At Step S2304, the value of p is stored as a variable q for tracing the linkage between VUs.

At Step S2305, the starting sector number of the q-th VU is set to file[i]. In this case, however, if $X_v[q]$ is greater than 0 and $Sp[X_v[q]]$ is smaller than $S_v[q]$, the arrangement is considered as shown in Fig.11(a), so that $Sp[X_v[q]]$ is set to file[i].

At Step S2306, starting sector number $S_v[q]$ of the q-th VU and sector length $L_v[q]$ of the VU are set into variables b and g, respectively. In this case, however, if $X_v[q]$ is equal to or greater than 0, or when there is a corresponding PRU and $S_p[X_v[q]]$ is smaller than $S_v[q]$, the PRU is considered to be laid out as shown in Fig.11(a) so that $Sp[X_v[q]]$ is set into b. Further, in order to take the size of the PRU into account, $L_v[q+ L_p[X_v[q]]$ is set into g. When $S_p[X_v[q]]$ is greater than $S_v[q]$, the PRU is considered to be laid out as shown in Fig.11(b) and $S_v[q]$ is set as b and $L_v[q] + L_p[X_v[q]]$ is set as g.

In the loop from Steps S2307 to S2309, storage of b+1 into A[b](Step S2308), increment of b and decrement of g(Step S2309) are repeated as long as g is greater than 0. This loop restores the FAT associated with the interior of the VU(or when the EUS has a PRU, the first VU in the EUS includes the PRU).

At Step S 2307, when g is equal to 0, the operation goes to Step S2310.

At Step S2310, the number of the subsequent VU, next[q], is stored as q. When q is -1, or there is no subsequent VU, the operation goes to Step S2312, and the operation goes to Step S2314 otherwise.

At Step S2314, the starting sector number of the q-th VU is stored into A[b] and the operation goes to Step S2306. Also in this case, similarly to Step S2306, if $X_v[q]$ is equal to or greater than 0, or when there is a corresponding PRU, the starting sector number $S_p[x_v[q]]$ of the PRU should be checked so that the smaller value is stored into A[b].

At Step S2312, a value indicating the end is set into A[b] and i is incremented.

After all the above process has been completed, A[b] and file[i] on RAM 103 are recorded into the FAT and the file entry in disk 113. Upon recording, each file in the file entry should be given with a filename different from the others. The process descried above makes it possible to make access to each EUS as a normal file, and it become possible to reproduce the EUS in the order recorded, by reading the sectors from the start of the EUS in the order specified by the filesystem.

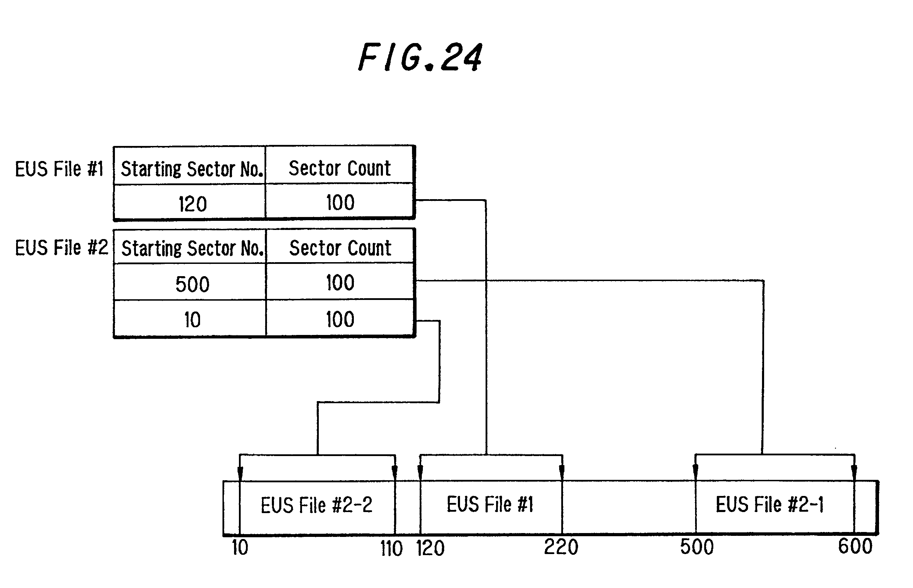

In this embodiment, FAT is used as sequence playback management information. However, it is possible to use information as to contiguous areas (partial sequences) as parts of EUS files(sequences), as shown in Fig.24. In this case, the information as to each partial sequence is composed of the starting sector number of the partial sequence and the number of sectors in the contiguous area (may be composed of the start and end sectors). With this configuration, it is possible to manage the order of reproduction of the sectors constituting files, similarly to the way FAT does. Needless to say, each partial sequence is composed of one or more units. In this way, the playback management order information in the present invention should not be limited to FAT, as shown in Fig. 3, but can be controlled by any other method as long as it is able to manage the playback order of the units.

In this embodiment, <Unit Start PT> of the UH-PKT(Fig.12) is recorded so as to check the continuity between units based on that value. However, serial numbers, originated from the start of the EUS(which is set at 0) may be used, instead. In sum, the data can be recovered as long as it includes whatever information that represents the continuity between units (unit order).

In the present embodiment, UH-PKTs are arranged at intervals of some seconds, but the similar data may be arranged at intervals of a longer unit or a shorter unit(every sector, for example).

Further, in the present embodiment, all the VUs have the same playback time. However, pieces of information representing continuity may be distributed data unit-wise, instead of time unit-wise. Further, they do not need to be arranged at regular intervals. Nevertheless, since the area from a certain UH-PKT to the start of the next UH-PKT should be recorded contiguously, too a long interval will put more restraint on use of empty areas on the disk. In contrast, too a short interval results in more waste.

In the present embodiment, the ID of the device that was used for recording a unit is recorded to the UH-PKT, but other variations as follows may be considered.

Some types of devices may have no networking function such as IEEE-1394, Ethernet, etc., hence have no unique ID. In such a case, it is possible to give each UH-PKT a piece of information for distinguishing whether the unit was recorded by the subject device or was duplicated from another. In this case, it is impossible to discern among units which were recorded by a plurality of unspecified devices, but it is at least possible to distinguish the units recorded by the subject device from those recorded by others, so that at least the data recorded by the subject device can be definitely recovered.

Further, when the above configuration is applied to a device which can record a plurality of TV programs in parallel onto a disk, there exist on the disk a multiple number of units having the same device ID and the same time information. To deal with such a case, information for distinction between programs, channel numbers, channel IDs and the like may be recorded to UH-PKTs.

Also, when the above configuration is applied to a case where videos input through a plurality of cameras are recorded in parallel onto the disk, there exist a multiple number of units having the same device ID and the same time information, as in the first variation. To deal with this case, camera IDs or input channel IDs may be added to UH-PKTs.

In this way, 'information for providing distinction of a device' in the present invention should not limited to IDs unique to devices, but any information as long as it can provide identification of the source of data such as the input channel in the device or the like, can be used.

According to the present invention, at the time of reproduction, if units equivalent in information as to playback order in respective sequences exist on a recording medium, device IDs which are unique to individual devices are allotted to respective units, it is possible to distinguish between the sequences. This configuration makes it possible to implement recovery of the management information, if the filesystem has been broken, which controls the order of units recorded at scattered locations on the recording medium and hence reliably reproduce the sequences.

Industrial Applicability

As has been described heretofore, the data recording method and data recovery method of the present invention are suitable for recording and recovery method for a data recording medium which assures reliable recovery of recorded data scattered in the disk in the collect order of reproduction in case the filesystem has been broken.

**Claims**

1. A data recording method for a recording medium in which a sequence of video or audio data is recorded by dividing it into a plurality of units and recording them on the recording medium while a playback order management data that provides a playback order of the units in correspondence with a positional information on the recording medium is used to manage the data recorded on the recording medium,
   **characterized in that** an information representing an ordinal position on the sequence in which each unit is to be reproduced is recorded within the unit, together with an information for providing a distinction of a device by which the unit was recorded.

2. A data recording method for a recording device in which a sequence of video data or audio data is recorded by dividing it into a plurality of units, each made up of one or a plurality of sectors, and recording them on the recording medium while a sector management data that provides the playback order of each sector on the recording medium is used to manage the data recorded on the recording medium,
   **characterized in that** an information representing an ordinal position on the sequence in which each unit is to be reproduced is recorded within the unit, together with an information for providing a distinction of a device by which the unit was recorded.

3. A data recording method for a recording device in which a sequence of video data or audio data is recorded by dividing it into a plurality of units and recording them on the recording medium while a sequence management data that provides the playback order of partial sequences, each made up of one or a plurality of units of contiguous sectors, is used to manage the data recorded on the recording medium,
   **characterized in that** an information representing an ordinal position on the sequence in which each unit is to be reproduced is recorded within the unit, together with an information for providing a distinction of a device by which the unit was recorded.

**4.** A data recovery method for a reproducing device,

wherein a sequence of video or audio data is recorded on a recording medium by dividing it into a plurality of units and recording each unit together with an information representing an ordinal position on the sequence in which the unit is to be reproduced and an information for providing distinction of a device by which the unit was recorded, while a playback order management data that provides a playback order of the units in correspondence with a positional information on the recording medium is used to manage the data recorded on the recording medium, and

wherein when a playback is impossible based on the playback order management data, the playback order management data is reconstructed in such a manner that only when two units contiguous on units on the recording medium indicate that the ordinal positions of the units for playback on the sequence are continuous and have the same information for providing the distinction of the device by which each unit was recorded, the two units can be played back in succession.

**5.** A data recovery method for a reproducing device,

wherein a sequence of video data or audio data is recorded on a recording medium by dividing it into a plurality of units, each made up of one or a plurality of sectors, and recording each unit together with an information representing an ordinal position on the sequence in which the unit is to be reproduced and an information for providing a distinction of a device by which the unit was recorded, while a sector management data that provides a playback order of the sectors on the recording medium is used to manage the data recorded on the recording medium, and

wherein when a playback is impossible based on the sector management data, the sector management data is reconstructed in such a manner that only when two units contiguous on units on the recording medium indicate that the ordinal positions of the units for playback on the sequence are continuous and have the same information for providing the distinction of the device by which each unit was recorded, the two units can be played back in succession.

**6.** A data recovery method for a reproducing device,

wherein a sequence of video data or audio data is recorded on the recording medium by dividing it into a plurality of units and recording each unit together with an information representing an ordinal position on the sequence in which the unit is to be reproduced and an information for providing a distinction of a device by which the unit was recorded, while sequence management data that provides a playback order of partial sequences, each made up of one or a plurality of units of contiguous sectors, is used to manage the data recorded on the recording medium, and

wherein when a playback is impossible based on the sequence management data, the sequence management data is reconstructed in such a manner that only when two units contiguous on units on the recording medium indicate that the ordinal positions of the units for playback on the sequence are continuous and have the same information for providing the distinction of a device by which each unit was recorded, the two units can be played back in succession.

**Amended claims under Art. 19.1 PCT**

**1.** A data recording method for a recording device in which a sequence of video data or audio data is recorded by dividing it into a plurality of units and recording them on the recording medium while a playback order management data that provides a playback order of the units in correspondence with a positional information on the recording medium is used to manage the data recorded on the recording medium,

**characterized in that** an information representing an ordinal position on the sequence in which each unit is to be reproduced is recorded within the unit, together with an information for providing a distinction of a device by which the unit was recorded.

**2.** A data recording method for a recording device in which a sequence of video data or audio data is recorded by dividing it into a plurality of units , each made up of one or a plurality of sectors, and recording them on the recording medium while a sector management data that provides the playback order of each sector on the recording medium is used to manage the data recorded on the recording medium,

**characterized in that** an information representing an ordinal position on the sequence in which each unit is to be reproduced is recorded within the unit, together with an information for providing a distinction of a device by which the unit was recorded.

**3.** A data recording method for a recording device in which a sequence of video data or audio data is recorded by dividing it into a plurality of units and recording them on the recording medium while a sequence management data that provides the playback order of partial sequences, each made up of one or a plurality of units of contiguous sectors, is used to manage the data recorded on the recording medium,
    **characterized in that** an information representing an ordinal position on the sequence in which each unit is to be reproduced is recorded within the unit, together with an information for providing a distinction of a device by which the unit was recorded.

**4.** A data recovery method for a reproducing device,
    wherein a sequence of video data or audio data is recorded on a recording medium by dividing it into a plurality of units and recording each unit together with an information representing an ordinal position on the sequence in which the unit is to be reproduced and an information for providing distinction of a device by which the unit was recorded, while a playback order management data that provides a playback order of the units in correspondence with a positional information on the recording medium is used to manage the data recorded on the recording medium, and
    wherein when a playback is impossible based on the playback order management data, the playback order management data is reconstructed in such a manner that only when two units contiguous on units on the recording medium indicate that the ordinal positions of the units for playback on the sequence are continuous and have the same information for providing the distinction of the device by which each unit was recorded, the two units can be played back in succession.

**5.** A data recovery method for a reproducing device,
    wherein a sequence of video data or audio data is recorded on a recording medium by dividing it into a plurality of units, each made up of one or a plurality of sectors, and recording each unit together with an information representing an ordinal position on the sequence in which the unit is to be reproduced and an information for providing a distinction of a device by which the unit was recorded, while a sector management data that provides a playback order of the sectors on the recording medium is used to manage the data recorded on the recording medium, and
    wherein when a playback is impossible based on the sector management data, the sector management data is reconstructed in such a manner that only when two units contiguous on units on the recording medium indicate that the ordinal positions of the units for playback on the sequence are continuous and have the same information for providing the distinction of the device by which each unit was recorded, the two units can be played back in succession.

**6.** A data recovery method for a reproducing device,
    wherein a sequence of video data or audio data is recorded on the recording medium by dividing it into a plurality of units and recording each unit together with an information representing an ordinal position on the sequence in which the unit is to be reproduced and an information for providing a distinction of a device by which the unit was recorded, while sequence management data that provides a playback order of partial sequences, each made up of one or a plurality of units of contiguous sectors, is used to manage the data recorded on the recording medium, and
    wherein when a playback is impossible based on the sequence management data, the sequence management data is reconstructed in such a manner that only when two units contiguous on units on the recording medium indicate that the ordinal positions of the units for playback on the sequence are continuous and have the same information for providing the distinction of a device by which each unit was recorded, the two units can be played back in succession.

## F I G. 1

# FIG.2

**Disk Recording Area** 113

| | |
| --- | --- |
| | User Area |
| | AV Stream Area |

Filesystem Management Information — 113a

113b

Management Information Area — 113c

113d

| EUS File #2-2 | | EUS File #1 | | | EUS File #2-1 | |
| --- | --- | --- | --- | --- | --- | --- |
| EUS | | EUS | | | EUS | |

# F I G . 3

Playback Order
Management Data

115

A4  A5  B3  B4  A1  A2  A3  B1  B2

# FIG.4

Entry

| | |
|---|---|
| 0000 | 0001 |
| 0001 | 0003 |
| 0002 | 0004 |
| 0003 | END |
| 0004 | END |

FAT

One-to-one correspondence

Data area

File Entry

File — File Name / Start FAT Entry

File — File Name / Start FAT Entry

116

# FIG.5

EUS

| Editable Unit Sequence (EUS) | | | |
|---|---|---|---|
| | | | |
| Editable Unit (EU) #0 | Editable Unit (EU) #1 | | Editable Unit (EU) #m−1 |

EU

EU     PRU     VU

| Post Recording Unit (PRU) | Video Unit (VU) #n | | Video Unit (VU) #n+k |
|---|---|---|---|
| | | | |

VU

| Block | Block | | Block | | Block | Block | Block | Block | | Block |
|---|---|---|---|---|---|---|---|---|---|---|

Bℓ   Bℓ   Bℓ     Bℓ     Bℓ

EP 1 227 679 A1

# FIG.6

Packet — PKT

| PKT1 | PKT2 |
|---|---|
| Packet header | Packet data |

| Bit Count | Field Name |
|---|---|
| 24 | packet_start_code_prefix |
| 8 | stream_id |
| 16 | PES_packet_length |
| 16 | Various flags |
| 8 | PES_header_data_length |
| 33 | PTS |
| 33 | DTS |
| N1X8 | stuffing_byte |

EP 1 227 679 A1

# FIG.7

EP 1 227 679 A1

EU

Editable Unit (EU)

PRU          VU                                      VU

(a)

| Post Recording Unit (PRU) | Video Unit (VU)#n | | Video Unit (VU)#n+k |

VU                                      VU

(b)

| Video Unit (VU)#n | | Video Unit (VU)#n+k | |

# FIG.8

Video Unit (VU) — VU

| UH_BLK | A_BLK | | A_BLK | V_BLK | V_BLK | V_BLK | | V_BLK |

Audio: AAU | AAU | | AAU

Video: sequence header | GOP header | GOP | GOP header | GOP

AAU : Audio Access Unit
UH_BLK : Unit Hedder Block
A_BLK : Audio Block
V_BLK : Video Block

EP 1 227 679 A1

# FIG.9

Post Recording Unit (PRU) — PRU

| UH_BLK | P_BLK | | P_BLK | P_BLK | P_BLK | P_BLK | | P_BLK |

UH_BLK : Unit Hedder Block
P_BLK : Padding Block

EP 1 227 679 A1

# FIG. 10

| EU | | | | |
|---|---|---|---|---|

| Post Recording Unit (PRU) | VU#n | | VU#n+k |
|---|---|---|---|

| UH_BLK | Audio Data | Padding Data |
|---|---|---|

| UH_BLK | Audio Data | Video Data |
|---|---|---|

| VH_BLK | Audio Data | Video Data |
|---|---|---|

| A_BLK | | A_BLK | | A_BLK | | A_BLK | | A_BLK | | A_BLK | | A_BLK | | A_BLK |
|---|---|---|---|---|---|---|---|---|---|---|---|---|---|---|

| SAU for VU#n | SAU for VU#n+k | Audio for VU#n | Audio for VU#n+k |
|---|---|---|---|

A_BLK : Audio Block
UH_BLK : Unit Header Block
SAU : Sub Audio Unit

EP 1 227 679 A1

# FIG. 11

(a) EU / PRU / VU #1

(b) VU #1-1 / PRU / VU #1-2

ECC Block Boundary

## FIG. 12

UH-PKT

| BP | Byte Count | Field Name |
|----|-----------|------------|
| 0 | 3 | packet_start_code_prefix |
| 3 | 1 | stream_id |
| 4 | 2 | PES_packet_length |
| 6 | 1 | Unit Property |
| 7 | 2 | Length of Unit |
| 9 | 8 | Recorder ID |
| 17 | 4 | GPS Time Stamp Offset |
| 21 | 4 | Unit Start PT |
| 25 | 2 | Start RLBN of Video Data |
| 27 | 1 | Number of IP Pictures (=NOIP) |
| 28 | 2×NOIP | End RLBN of IP Pictures |
| — | 1 | Number of VU (=NOV) |
| — | 2×NOV | Start RLBN of Data for VU |

EP 1 227 679 A1

## FIG.13

| Recorder ID = XX | Recorder ID = YY | Recorder ID = XX |
|---|---|---|
| GPS TS0 = 99/09 | GPS TS0 = 99/09 | GPS TS0 = 99/09 |
| Unit Start PT = 0 | Unit Start PT = 1 | Unit Start PT = 1 |

| B1 | A | B2 | |
|---|---|---|---|

| PRU | VU | VU | VU | ~ | VU |
|---|---|---|---|---|---|

EP 1 227 679 A1

# FIG.14

EUS Management File

| BP | Byte Count | Field Name |
|----|------------|----------------|
| 0 | 4 | Table ID |
| 4 | 4 | Table Size |
| 8 | 4 | Next USI ID |
| 12 | 2 | Number of EUSI |
| 14 | — | EUSI |

EP 1 227 679 A1

# FIG. 15

EUSI

| BP | Byte Count | Field Name |
|----|-----------|------------|
| 0 | 4 | EUSI ID |
| 4 | 4 | EUSI Size |
| 8 | 23 | Title Text |
| 31 | 1 | Character Code |
| 32 | 6 | Time Stamp Creation |
| 44 | 6 | Time Stamp_Modification |
| 50 | 10 | Text Information |
| 60 | 10 | Thumbnail Information |
| 70 | 2 | Data File ID |
| 72 | 4 | Data File Size |
| 76 | 4 | Start PT |
| 80 | 4 | End PT |
| 84 | 2 | EUS Property |
| 86 | 2 | Video Property |
| 90 | 4 | Camera Property |
| — | 2 | Audio Preperty |
| — | 2 | Post Recording Unit Size |
| — | 2 | Post Recording Property |
| — | 64 | Source Information |
| — | 64 | Copyright Property |
| — | 2 | Number of Still Picture |
| — | — | Still Picture Information |
| — | — | Address LUT |
| — | — | Reference Information |

# FIG. 16

Address LUT

| BP | Byte Count | Field Name |
|---|---|---|
| 0 | 4 | Address Offset |
| 4 | 4 | PB Time of EU |
| 8 | 4 | PB Time of VU |
| 12 | 4 | Number of PRU Information (=NOPI) |
| 16 | 4 | Number of VU Information (NOVI) |
| 20 | 4×NOPI | PRU Information |
| — | n×NOVI | VU Information |

# FIG. 17

PRU Information

| BP | Byte Count | Field Name |
|---|---|---|
| 0 | 3 | RLBN of PRU |
| 3 | 1 | PRU Status |

# FIG. 18

VU Information

| BP | Byte Count | Field Name |
|---|---|---|
| 0 | 3 | RLBN of VU |
| 3 | 1 | VU Status |
| 4 | 1 | Number of IP Pictures |
| 5 | 2×NOIP | End RLBN of IP Pictures |

EP 1 227 679 A1

# FIG.19

Flowchart:

Actuate encoder 106 — S1901

Is there a large enough contiguous area to record EU ? — S1902
- NO → Stop recording — S1912
- YES ↓

i ← 0
adder ← Empty area top address — S1903

S1904 — Wait for data accumulation

i = 0 ? — S1905
- YES →
- NO ↓

Record VU data from buffer memory 108 — S1906

i ← i + 1 — S1907

i = Nvu — S1908
- NO → (loop back to S1904)
- YES → (loop back to S1901)

adder = ECC block boundary ? — S1909
- YES →
- NO ↓

Record VU data from buffer memory 108 until adder = ECC block boundary — S1910

Record PRU — S1911

# FIG.20

S2001 — $b \leftarrow 0, \; Nv \leftarrow 0, \; Np \leftarrow 0$

S2002 — Read Sector 'b'

S2003 — $b \leftarrow b + 1$

S2004 — UH_BLK ?  NO

YES

S2005 — VU ?  NO

YES

S2006
$Sv[Nv] \leftarrow b$
$Iv[Nv] \leftarrow$ Recorder ID
$Ov[Nv] \leftarrow$ GPS Time stamp Offset
$Pv[Nv] \leftarrow$ Unit Start PT
$Lv[Nv] \leftarrow$ Unit Length

S2008
$Sp[Np] \leftarrow b$
$Ip[Np] \leftarrow$ Recorder ID
$Op[Np] \leftarrow$ GPS Time stamp Offset
$Pp[Np] \leftarrow$ Unit Start PT
$Lp[Np] \leftarrow$ Unit Length

S2007 — $Nv \leftarrow Nv + 1$

$Np \leftarrow Np + 1$

S2009

S2010 — $b \leftarrow b + 1$

# FIG.21

S2101 — $Xv[j] \leftarrow 1, \text{ for } 0 \leq j \leq Np - 1$
$i \leftarrow 0$

S2102

NO ← $i < Np$ ?

YES

S2103 — $j \leftarrow 0$

S2104

NO ← $j < Nv$ ?

YES

S2105 — $Iv[j] = Ip[i],$ $Ov[j] = Op[i]$ and $Pv[j] = Pp[i]$ ? → NO

YES

S2106 — $Xv[j] \leftarrow i$

S2107 — $j \leftarrow j + 1$

S2108 — $i \leftarrow i + 1$

# FIG.22

S2201 — $next[i] \leftarrow -1,$ for $0 \leq i \leq Np - 1$
$top[i] \leftarrow$ true, for $0 \leq i \leq Np - 1$

S2202 — $p \leftarrow 0$

S2203 — $p < Nv$ ?
NO
YES

S2204 — $q \leftarrow 0$

S2205 — $q < Nv$ ?
NO
YES

S2206 — $Ov[p] = Ov[q],$
$Iv[p] = Iv[q],$
$Pv[p] < Pv[q]$ and
$Pv[p] + THR \geq Pv[q]$ ?
NO
YES

S2207 — $next[p] \leftarrow q$
$top[q] \leftarrow$ false

S2208 — $q \leftarrow q + 1$

S2209 — $p \leftarrow p + 1$

# FIG.23

S2301 — $p \leftarrow 0$ / $i \leftarrow 0$

S2302 — $p < Np$ ? — NO / YES

S2303 — $top[p] = true$ ? — NO / YES

S2304 — $q \leftarrow p$

S2305 — $file[i] \leftarrow Sv[q]$

S2306 — $b \leftarrow Sv[q]$ / $g \leftarrow Lv[q]$

S2307 — $g > 0$ — NO / YES

S2308 — $A[b] \leftarrow b + 1$

S2309 — $b \leftarrow b + 1$ / $g \leftarrow g - 1$

S2310 — $q \leftarrow next[q]$

S2311 — $q = -1$ ? — NO / YES

S2312 — $A[b] \leftarrow END$ / $i \leftarrow i + 1$

S2314 — $A[b] \leftarrow s[q]$

S2313 — $p \leftarrow p + 1$

## FIG.24

| EUS File #1 | Starting Sector No. | Sector Count |
|---|---|---|
| | 120 | 100 |

| EUS File #2 | Starting Sector No. | Sector Count |
|---|---|---|
| | 500 | 100 |
| | 10 | 100 |

| EUS File #2-2 | EUS File #1 | | EUS File #2-1 |
|---|---|---|---|

10        110 120        220        500        600

EP 1 227 679 A1

# FIG.25

| Management area 601 | Data area 602 |
|---|---|

| Program Map 603 | FAT 604 |
|---|---|

| Block 605 | Block 606 | | Block |
|---|---|---|---|

# FIG.26

Program P1 { Title / Start FAT Entry

Program P2 { Title / Start FAT Entry

Entry
0000 → 0001
0001 → 0003
0002 → 0004
0003 → END
0004 → END

One-to-one correspondence

Program Map 603    FAT604    Data area 602

EP 1 227 679 A1

# FIG.27

S2701 — prev ← Ta / So ← 0 / Bo ← To

S2702 — i ← 0 / b ← 1

S2703 — b < Nb ?  NO / YES

S2704 — curr ← Tb

S2705 — prev + THR > curr ?  NO / YES

S2707 — Ei ← b − 1 / Fi ← prev

S2708 — i ← i + 1

S2709 — Si ← b / Bi ← curr

S2706 — A b−1 ← b

S2710 — prev ← curr / b ← b + 1

S2711 — Ei ← b − 1 / Fi ← prev / Np ← i + 1

# FIG.28

S2801 — $R_i = \text{true, for } 0 \leq i \leq N_p - 1$

S2802 — $p \leftarrow 0$

S2803

NO ← $p < N_p$ ?

YES

S2804 — $q \leftarrow 0$

S2805

NO ← $q < N_p$ ?

YES

S2806

$F_p + THR < B_p$ ? → NO

YES

S2807 —
$A_{Ep} \leftarrow S_q$
$F_p \leftarrow F_q$
$E_p \leftarrow E_q$
$R_q \leftarrow \text{false}$

S2808 — $q \leftarrow q + 1$

S2809 — $p \leftarrow p + 1$

# FIG.29

(a) Arrangement on the disk          Time code

| 0:59:59:59 | 1:00:00:00 | 1:00:00:00 |

B1   A   B2

(b) Actual playback order

B1 → A → B2

(c) Preferred playback order

B1 → B2 → A

EP 1 227 679 A1

EP 1 227 679 A1

<table>
<tr><td colspan="2" align="center">**INTERNATIONAL SEARCH REPORT**</td><td>International application No.<br>PCT/JP00/07056</td></tr>
</table>

A. CLASSIFICATION OF SUBJECT MATTER
    Int.Cl⁷   H04N 5/85 , H04N4 5/92 , G11B 20/18 , G11B 27/00 , G11B 27/10

According to International Patent Classification (IPC) or to both national classification and IPC

B. FIELDS SEARCHED

Minimum documentation searched (classification system followed by classification symbols)
    Int.Cl⁷   H04N 5/85 , H04N4 5/91-5/956 , G11B 20/18 , G11B 27/00 , G11B 27/10

Documentation searched other than minimum documentation to the extent that such documents are included in the fields searched
    Jitsuyo Shinan Koho        1922-1996    Toroku Jitsuyo Shinan Koho  1994-2001
    Kokai Jitsuyo Shinan Koho  1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| PA | JP, 2000-132910, A (Sony Corporation),<br>12 May, 2000 (12.05.00)   (Family: none) | 1-6 |
| PA | JP, 2000-57745, A (Samsung Electron Co., Ltd. ),<br>25 February, 2000 (25.02.00)<br>& EP, 967609, A2    & CN 1240298, A<br>& KR, 2000004839, A | 1-6 |
| A | JP, 11-275516, A (Hitachi, Ltd.),<br>08 October, 1999 (08.10.99)   (Family: none) | 1-6 |
| A | JP, 11-162119, A (Toshiba Corporation),<br>18 June, 1999 (18.06.99)   (Family: none) | 1-6 |
| A | JP, 10-70698, A (Sony Corporation),<br>10 March, 1998 (10.03.98)   (Family: none) | 1-6 |
| A | JP, 9-130718, A (Sony Corporation),<br>16 May, 1997 (16.05.97)   (Family: none) | 1-6 |

☒  Further documents are listed in the continuation of Box C.     ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    04 January, 2001 (04.01.01) | Date of mailing of the international search report<br>    16 January, 2001 (16.01.01) |
|---|---|
| Name and mailing address of the ISA/<br>    Japanese Patent Office | Authorized officer |
| Facsimile No. | Telephone No. |

Form PCT/ISA/210 (second sheet) (July 1992)

42